(19) Europäisches Patentamt
European Patent Office
Office européen des brevets

(11) **EP 4 655 736 B1**

(12) **EUROPEAN PATENT SPECIFICATION**

(45) Date of publication and mention
of the grant of the patent:
**06.05.2026 Bulletin 2026/19**

(21) Application number: **23828487.1**

(22) Date of filing: **08.12.2023**

(51) International Patent Classification (IPC):
***G06Q 10/063*** *(2023.01)*

(52) Cooperative Patent Classification (CPC):
**G06Q 10/063**

(86) International application number:
**PCT/IB2023/062396**

(87) International publication number:
**WO 2024/157072 (02.08.2024 Gazette 2024/31)**

(54) **SERVER DEVICE, INFORMATION PROCESSING METHOD, AND STORAGE MEDIUM**

SERVERGERÄT, INFORMATIONSVERARBEITUNGSVERFAHREN UND SPEICHERMEDIUM

DISPOSITIF SERVEUR, PROCÉDÉ DE TRAITEMENT D'INFORMATIONS ET SUPPORT DE STOCKAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **27.01.2023 JP 2023011322**

(43) Date of publication of application:
**03.12.2025 Bulletin 2025/49**

(73) Proprietor: **TOYOTA JIDOSHA KABUSHIKI KAISHA**
**Toyota-shi, Aichi-ken 471-8571 (JP)**

(72) Inventors:
• **NITTA, Iwao**
**Toyota-shi, Aichi-ken, 471- 8571 (JP)**
• **FUJIWARA, Teruyoshi**
**Toyota-shi, Aichi-ken, 471- 8571 (JP)**
• **SUZUKI, Ryota**
**Nagoya-shi, Aichi-ken, 451- 6015 (JP)**

(74) Representative: **Cabinet Beau de Loménie**
**103, rue de Grenelle / CS 90800**
**75340 Paris Cedex 07 (FR)**

(56) References cited:
**CN-A- 113 870 024     US-A1- 2020 101 367**

**Description**

CROSS-REFERENCE TO RELATED APPLICATION

This application claims priority to Japanese Patent Application No. 2023-011322 filed on January 27, 2023.

BACKGROUND OF THE INVENTION

1. Field of the Invention

The present disclosure relates to a server device, an information processing method, and a storage medium. The present disclosure relates to a supply chain.

2. Description of Related Art

There is known a system in which information is shared among a plurality of companies constituting a supply chain. For example, Japanese Unexamined Patent Application Publication No. 2017-500663 (JP 2017-500663 A) discloses a system that visualizes a supply chain.

SUMMARY OF THE INVENTION

The present disclosure provides collection of information on a supply chain.

One aspect of embodiments of the present disclosure relates to a server device including a storage device configured to store, for individual companies in a supply chain, pieces of product information on products of the companies, and a control unit. The control unit is configured to, assuming that each of the companies in the supply chain is a target company, receive, from an account of the target company, either of (i) a first request to link, to first product information on a target product of the target company, second product information on an upstream product of an upstream company for the target company in the supply chain and (ii) a second request to assign termination information indicating a terminal end to the first product information, create a product tree showing relationships among the products of the companies by reflecting each of the received requests, execute information processing related to the created product tree, and output a result of executing the information processing.

One aspect of the embodiments of the present disclosure relates to an information processing method to be executed by a server device including a storage device configured to store, for individual companies in a supply chain, pieces of product information on products of the companies. The information processing method includes, assuming that each of the companies in the supply chain is a target company, receiving, from an account of the target company, either of (i) a first request to link, to first product information on a target product of the target company, second product information on an upstream product of an upstream company for the target company in the supply chain and (ii) a second request to assign termination information indicating a terminal end to the first product information, creating a product tree showing relationships among the products of the companies by reflecting each of the received requests, executing information processing related to the created product tree, and outputting a result of executing the information processing.

One aspect of the embodiments of the present disclosure relates to a storage medium storing instructions that cause an information processing device to perform functions. The information processing device is configured to communicate with a server device configured to store pieces of product information on products of a companies. The functions include, after accessing the server device (1) with an account of the target company, transmitting to the server device, either of (i) a first request to link, to first product information on a target product of the target company, second product information on an upstream product of an upstream company for the target company in the supply chain and (ii) a second request to assign termination information indicating a terminal end to the first product information.

One aspect of the embodiments of the present disclosure relates to a server device including a storage device configured to store, for individual companies in a supply chain, pieces of product information on products of the companies, and a control unit. The control unit is configured to, assuming that each of the companies in the supply chain is a target company, receive, from an account of the target company, either of (i) a first request to link, to first product information on a target product of the target company, second product information on an upstream product of an upstream company for the target company in the supply chain and (ii) a second request to assign termination information indicating a terminal end to the first product information, and save linking information and the termination information in the storage device in response to each of the requests received from the companies.

Another aspect may relates to a program for causing a computer to execute the above method, or a non-transitory computer-readable storage medium storing the program.

According to the present disclosure, it is possible to collect the information on the supply chain.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 illustrates a supply chain according to a first embodiment;
FIG. 2 illustrates relationships among products supplied by the supply chain;
FIG. 3 shows an outline of a process to be performed between company terminals and a server device;
FIG. 4 is a hardware configuration diagram of the server device according to the first embodiment;
FIG. 5 is a hardware configuration diagram of the company terminal according to the first embodiment;
FIG. 6 is a software configuration diagram of the server device according to the first embodiment;
FIG. 7 is a software configuration diagram of the company terminal according to the first embodiment;
FIG. 8 shows an example of product information generated by a product information generating unit;
FIG. 9A shows an example of a screen output by an authority setting unit;
FIG. 9B shows an example of permission information generated by the authority setting unit based on input information;
FIG. 10 shows an example of a user interface including a list of products that are linking destination candidates;
FIG. 11 shows a flow of a process to be executed by the server device;
FIG. 12 illustrates a plurality of linked pieces of product information;
FIG. 13 illustrates a product tree and an amount of carbon dioxide emitted in each process;
FIG. 14 shows an example of a screen in which the product tree is output as an image;
FIG. 15 shows an example of the product tree in a case where products without access authority are hidden;
FIG. 16 is a sequence diagram illustrating a process to be performed by the server device and the company terminal in first to third phases;
FIG. 17 is a sequence diagram illustrating a process to be performed by the server device and the company terminal in a fourth phase;
FIG. 18 is a software configuration diagram of a server device according to a second embodiment;
FIG. 19 is a software configuration diagram of a company terminal according to the second embodiment;
FIG. 20 is a sequence diagram illustrating a process to be performed by the server device and the company terminals in the second embodiment; and
FIG. 21 is a sequence diagram illustrating a process to be performed by a server device and a company terminal in a third embodiment.

DETAILED DESCRIPTION OF EMBODIMENTS

In recent years, there has been a demand to trace the amounts of greenhouse gases emitted when manufacturing products such as automobiles and batteries, that is, to trace a carbon footprint.

It is assumed that a product is supplied by a supply chain including a plurality of companies. In one example, at least some companies (intermediate suppliers) in the supply chain may receive components from one or more upstream companies, produce in-house products by using the received components, and deliver the produced in-house products to companies in the next step (downstream companies). Most upstream companies may directly produce in-house products and deliver the produced in-house products to companies in the next step. Some companies in the supply chain may directly deliver, to different companies, products received from other companies (i.e., participate in distribution). A plurality of companies repeats this process, and a final product is obtained in the final step.

In a case of automotive product acquisition, the supply chain may be constituted by original equipment manufacturers (OEMs) and a plurality of suppliers. The OEM may be a company that assembles a final product (most downstream company), and the supplier may be a company that supplies components, materials, assemblies, etc. for producing the product. The companies in the supply chain may be determined based on the product.

In the following description, the components etc. produced by the suppliers will be referred to as "products", and the product obtained finally will be referred to as "final product". In one example, the final product may be supplied to a consumer. The suppliers and the OEMs in the supply chain will be referred to simply as "companies". A plurality of hierarchical levels of the supply chain will be referred to as "tiers".

For example, in order to calculate the total amount of greenhouse gases emitted along with the manufacture of the final product in such a system, it is necessary to clarify product supply relationships among a plurality of companies. This is because it is difficult to correctly calculate the total amount of greenhouse gases emitted in a plurality of steps unless the relationships among a plurality of products constituting the final product are clear. In order to solve this problem, for example, a process for generating a tree showing supply relationships among a plurality of products constituting the final product (hereinafter referred to as "product tree") is necessary.

Each company other than the most downstream company can be caused to provide information indicating product supply relationships with a plurality of companies. However, it is basically difficult to know which companies belong to the supply chain unless there are direct business relationships. Therefore, when the number of hierarchical levels in the supply chain increases, it is very difficult for the most downstream company to grasp which and how many companies are present at which levels in the supply chain. In such a case, it is difficult to correctly determine whether the pieces of information collected from the companies belonging to the supply chain are complete (i.e., whether the product tree is complete). A server device of the present disclosure solves such a problem.

A server device according to one aspect of the present disclosure includes a storage device configured to store, for individual companies in a supply chain, pieces of product information on products of the companies, and a control unit. The control unit is configured to, assuming that each of the companies in the supply chain is a target company, receive, from an account of the target company, either of (1) a first request to link, to first product information on a target product of the target company, second product information on an upstream product of an upstream company for the target company in the supply chain and (2) a second request to assign termination information indicating a terminal end to the first product information, create a product tree showing relationships among the products of the companies by reflecting each of the received requests, execute information processing related to the created product tree, and output a result of executing the information processing.

In the supply chain, the company positioned on the upstream side delivers a product to the company positioned on the downstream side. In one example, the most downstream company is a company that assembles a final product (OEM). Focusing on certain hierarchical levels in the supply chain, the company positioned on the upstream side is defined as the upstream company, and the company positioned on the downstream side is defined as the downstream company. A product of the upstream company will be referred to as "upstream product", and a product of the downstream company will be referred to as "downstream product". The upstream product can be regarded as a product constituting (incorporated in) the downstream product.

The server device of the present disclosure can receive the request to link the pieces of product information (i.e., upstream product information and downstream product information) (first request) from the account of the target company, generate linking information in response to the first request, and store the generated linking information. The linking information is information indicating a linking relationship between the information on the downstream product and the information on the upstream product. By repeating this process, the server device can create a product tree associated with the final product. When the number of companies in the supply chain increases, however, it is difficult to determine whether the pieces of product information necessary to create the product tree are complete.

Therefore, the server device according to the present disclosure receives either of the first request and the request to assign the information indicating the terminal end of the product tree (second request) from the account of the target company, and reflects the received request in the product tree. Thus, it is possible to determine whether the product tree is finalized (whether the information indicating mutual relationships is complete for all the pieces of product information). The second request may be received only when the node associated with the target product is a leaf node.

The information processing related to the product tree may include a process of determining whether the termination information is assigned to pieces of product information on all products associated with leaf nodes. The process of outputting the result of executing the information processing may include a process of outputting a result of the determination.

The first request may include information indicating whether the linking has been completed for the target product. The information processing related to the product tree may include a process of determining whether the linking has been completed for pieces of product information on all products associated with nodes other than the leaf nodes. Accordingly, the process of outputting the result of executing the information processing may include a process of outputting a result of the determination.

The information processing related to the product tree may include a process of determining whether a product associated with the leaf node of the product tree is a provisional terminal end product that is provisionally at the terminal end due to reception of neither of the first request and the second request. In this case, the process of outputting the result of executing the information processing may include a process of outputting an alert to an account of a company associated with the provisional terminal end product. Further, the process of outputting the result of executing the information processing may include a process of giving a notification about a reminder to an account of a provisional terminal end company having authority to make each of the requests for product information on the provisional terminal end product. Further, the process of outputting the result of executing the information processing may include a process of, when the most downstream company is not permitted to view the product information on the provisional terminal end product, identifying product information that the most downstream company is permitted to view, and giving a notification about a request for the reminder to an account of a company having the identified product information.

The information processing related to the product tree may include a process of generating a tree diagram showing the product tree. In this case, the process of outputting the result of executing the information processing may include a process of outputting the generated tree diagram.

The information processing related to the product tree may include a process of repeating, from most upstream products belonging to the product tree as leaf nodes to a product of interest belonging to the product tree as a root node, transfer and integration of pieces of traceability-related information included in the pieces of product information. In this case, the process of outputting the result of executing the information processing may include a process of outputting a result of the integration of the pieces of traceability-related information.

The information processing related to the product tree may include a process of collecting pieces of location information included in the pieces of product information. In this case, the process of outputting the result of executing the information processing may include a process of outputting the collected pieces of location information.

Specific embodiments of the present disclosure will be described below with reference to the drawings. The hardware configuration, module configuration, functional configuration, etc. described in each embodiment are not intended to limit the technical scope of the disclosure to these configurations unless otherwise specified.

First Embodiment

An information processing system according to the present embodiment provides information on products supplied by a supply chain including a plurality of companies. The information on products is typically information on traceability. The companies belonging to the supply chain may be determined as appropriate based on attributes of products etc.

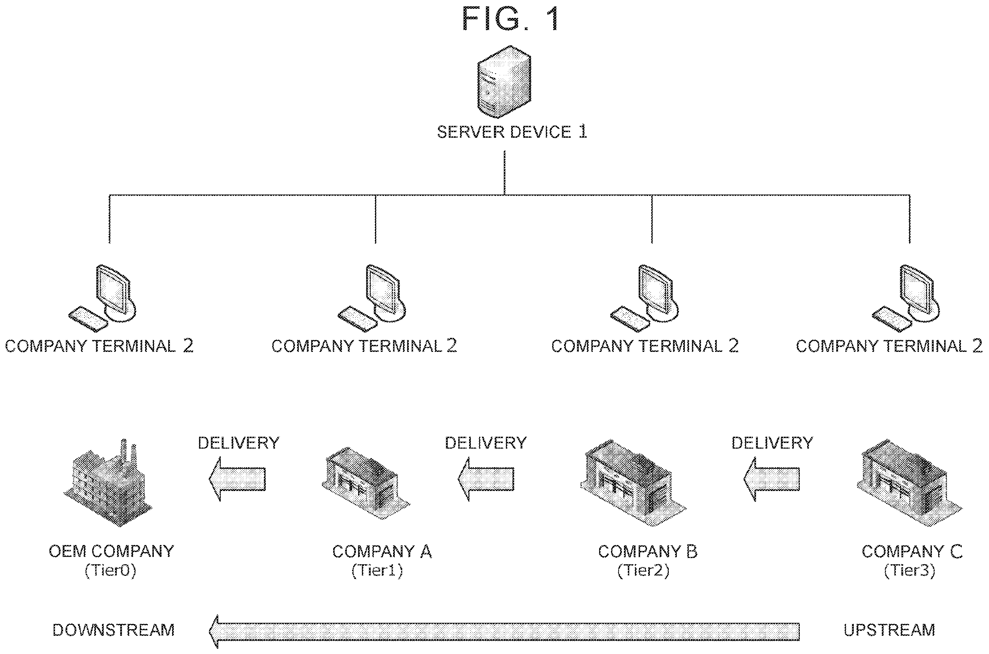

First, the structure of the supply chain will be described. FIG. 1 illustrates an example of the supply chain according to the present embodiment. The supply chain shown in FIG. 1 is constituted by an OEM company and a plurality of supplier companies. In the example of FIG. 1, a supply chain for manufacturing an automobile or a product related to the automobile, such as a battery, is assumed. The OEM company assembles a final product. The supplier companies (companies A to C) supply components, materials, assemblies, etc. for manufacturing the final product. The supplier companies each produce one or more products and deliver the products to a company positioned one level lower. The companies repeat this process, and the final product is obtained in the final step (i.e., the OEM company).

In the hierarchical levels of the supply chain of the present embodiment, the side that delivers a product will be referred to as "upstream side", and the side that purchases the product and produces a new product will be referred to as "downstream side". A company positioned on the upstream side will herein be referred to as "upstream company", and a company positioned on the downstream side will herein be referred to as "downstream company". A product produced by the upstream company will be referred to as "upstream product", and a product produced by the downstream company will be referred to as "downstream product". The downstream product incorporates the upstream product. In the present embodiment, the hierarchical levels in the supply chain will be referred to as "tiers". Tier 0 is the lowest level (corresponding to the OEM company) at which the final product is assembled, and transition is made to the upstream side in the order of Tiers 1, 2, and 3. The downstream company may turn into an upstream company depending on the level of interest. For example, the company B positioned in Tier 2 is a downstream company in relation to Tier 3, but is an upstream company in relation to Tier 1. Thus, the definitions of the upstream company and the downstream company may vary from level to level.

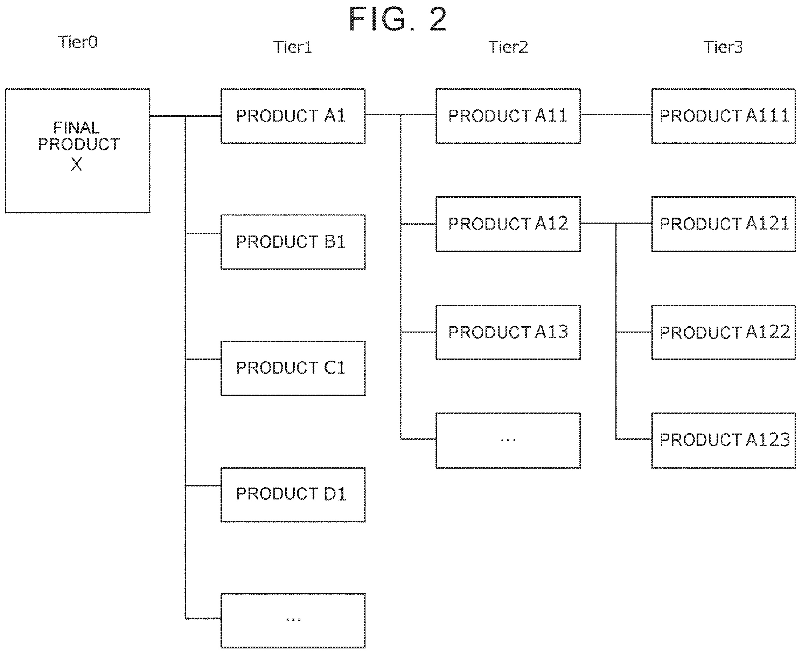

FIG. 2 illustrates relationships among products supplied by the supply chain. Supply relationships among a plurality of products constituting a final product X are represented by a tree diagram. In this example, the final product X is produced by assembling products A1, B1, C1, D1, etc. The product A1 is produced by assembling products A11, A12, A13, etc. In this way, the relationships among the products constituting the final product can be represented by a tree diagram in which the individual products serve as nodes. A tree diagram for a specific final product will hereinafter be referred to as "product tree".

A server device 1 according to the present embodiment collects pieces of information on products produced by the companies (hereinafter referred to as "product information") and information for linking the pieces of product information from terminals associated with the companies (company terminals 2), and generates the product tree based on these pieces of information. The product information includes information on traceability (e.g., information on the amount of greenhouse gas emissions; hereinafter referred to as "traceability-related information"). A carbon footprint etc. can be traced by tracing the product tree.

As shown in FIG. 1, the information processing system according to the present embodiment includes the server device 1 and a plurality of company terminals 2.

The company terminals 2 are associated with the companies constituting the supply chain. Any number of terminals may be associated with each company. Terminals associated with a target company may include a terminal of a company (e.g., an agency company) that performs operations related to the target company.

The server device 1 collects pieces of information for generating a product tree from the company terminals 2, and generates the product tree based on the collected pieces of information. The server device 1 can execute a traceability-related process (typically a process for calculating the amount of carbon dioxide emission) based on the generated product tree. The result of execution of the process can be transmitted to the company terminals 2.

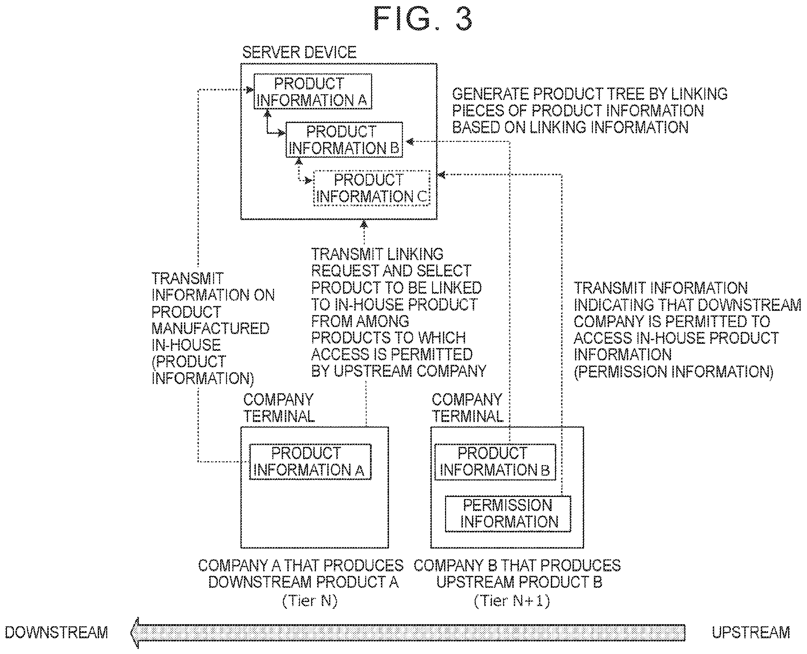

Next, an outline of a process for generating the product tree by the server device 1 will be described with reference to FIG. 3. FIG. 3 shows an outline of a process to be performed between the company terminals 2 and the server device 1. In the example of FIG. 3, it is assumed that a downstream company A and an upstream company B are present at any hierarchical levels. It is assumed that the company B produces a product B and delivers it to the company A, and the company A produces a product A by using the product B. That is, in the example of FIG. 3, the product B is a child node of the product A on the product tree.

To generate the product tree, the company terminal 2 associated with each company transmits information on a product produced by the company to the server device 1. In this example, the company terminal 2 associated with the company A transmits product information on the product A (referred to as "product information A") to the server device 1. Similarly, the company terminal 2 associated with the company B transmits product information on the product B (referred to as "product information B") to the server device 1. The product information of each company is stored in the server device 1.

An operation for linking the pieces of product information stored in the server device 1 is performed by the company terminal 2. In one example, a representative person of a downstream company logs into the server device 1 from the company terminal 2 by using an account of the downstream company, and selects an upstream product to be linked with a downstream product that is the in-house product. In this way, the pieces of product information are linked from the downstream product to the upstream product. The server device 1 links the pieces of product information with each other based on the selection.

If all the products in the supply chain and all the pieces of information on the products are presented as options for the selection of the product to be linked, however, the confidentiality will be lost for information on the companies constituting the supply chain and information on the products produced by the companies. Further, it may be inappropriate to disclose the entire product tree to one supplier.

Therefore, the server device 1 according to the present embodiment invests authority to access the product information of the upstream product in the downstream company in advance in response to a request from the upstream company. The server device 1 permits reference from the downstream company within a range of the invested authority.

In the example of FIG. 3, the company terminal 2 associated with the upstream company B transmits, to the server device 1, an instruction request (information) to "invest the company A with authority to access the product information B". When a linking request is received from the company terminal 2 associated with the company A, the server device 1 provides only a list of product information that the company A is authorized to access, and prompts the company A to make selection for product information to be linked. When the company terminal 2 associated with the company A requests reference to the product tree, the server device 1 provides the company terminal 2 with the product tree in which information other than the information that the company A is authorized to access is concealed. Thus, the information on irrelevant companies and products can be concealed.

Hardware Configurations

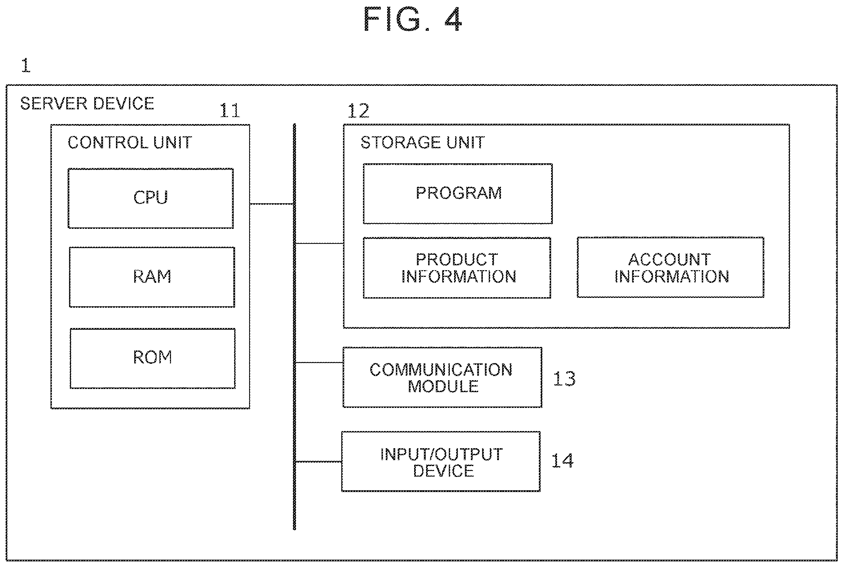

Next, the hardware configurations of the devices constituting the system will be described. FIG. 4 schematically shows an example of the hardware configuration of the server device 1 according to the present embodiment. The server device 1 is a computer including a control unit 11, a storage unit 12, a communication module 13, and an input/output device 14.

The server device 1 may be a computer including a processor (e.g., a central processing unit (CPU) or a graphics processing unit (GPU)), a main storage device (e.g., a random access memory (RAM) or a read only memory (ROM)), and an auxiliary storage device (e.g., an erasable programmable read only memory (EPROM), a hard disk drive, or a removable medium). An operating system (OS), various programs, various tables, etc. are stored in the auxiliary storage device. The programs stored in the auxiliary storage device are executed such that various functions (software modules) can be implemented to meet a predetermined purpose as described later. Some or all of the functions may be implemented as hardware modules by a hardware circuit such as an application specific integrated circuit (ASIC) or a field programmable gate array (FPGA).

The control unit 11 is an arithmetic unit that implements various functions of the server device 1 by executing a predetermined program. The control unit 11 can be implemented by, for example, a hardware processor such as a CPU. The control unit 11 may include a RAM, a read only memory (ROM), a cache memory, etc.

The storage unit 12 is means for storing information, and is constituted by a storage medium such as a RAM, a magnetic disk, or a flash memory. The storage unit 12 stores programs to be executed by the control unit 11, data to be used by the programs, etc. A database is constructed in the storage unit 12 and stores pieces of product information collected from the company terminals 2 and pieces of account information related to the companies. Details will be described later.

The communication module 13 is a communication interface for connecting the server device 1 to a network. The communication module 13 may include, for example, a network interface board and a wireless communication interface for wireless communication. The server device 1 can perform data communication with other computers (e.g., the company terminals 2) via the communication module 13.

The input/output device 14 is means for receiving an input operation performed by an operator and presenting information to the operator. Specifically, the input/output device 14 includes input devices such as a mouse and a keyboard, and output devices such as a display and a speaker. The input/output device may be an integrated device such as a touch panel display.

In the specific hardware configuration of the server device 1, any component may be omitted, replaced, or added as appropriate depending on embodiments. For example, the control unit 11 may include a plurality of hardware processors. The hardware processor may be a microprocessor, an FPGA, a GPU, etc. The input/output device 14 may be omitted, or an input/output device other than the illustrated one (e.g., an optical drive) may be added. The server device 1 may be constituted by a plurality of computers. In this case, the hardware configurations of the computers may or may not agree with each other.

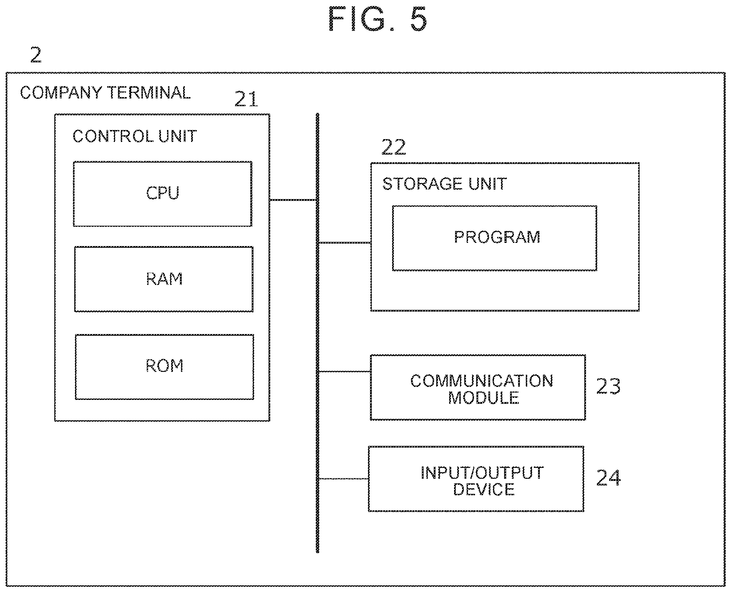

FIG. 5 schematically shows an example of the hardware configuration of the company terminal 2 according to the present embodiment. The company terminal 2 is a computer including a control unit 21, a storage unit 22, a communication module 23, and an input/output device 24.

Similarly to the server device 1, the company terminal 2 may be a computer including a processor (e.g., a CPU or a GPU), a main storage device (e.g., a RAM or a ROM), and an auxiliary storage device (e.g., an EPROM, a hard disk drive, or a removable medium). Some or all of the functions (software modules) may be implemented as hardware modules by a hardware circuit such as an ASIC or an FPGA.

The control unit 21 is an arithmetic unit that implements various functions (software modules) of the company terminal 2 by executing a predetermined program. The control unit 21 can be implemented by, for example, a hardware processor such as a CPU. The control unit 21 may include a RAM, a read only memory (ROM), a cache memory, etc.

The storage unit 22 is means for storing information, and is constituted by a storage medium such as a RAM, a magnetic disk, or a flash memory. The storage unit 22 stores programs to be executed by the control unit 21, data to be used by the programs, etc.

The communication module 23 is a communication interface for connecting the company terminal 2 to a network. The communication module 23 may include, for example, a network interface board and a wireless communication interface for wireless communication. The company terminal 2 can perform data communication with other computers (e.g., the server device 1) via the communication module 23.

The input/output device 24 is means for receiving an input operation performed by an operator and presenting information to the operator. Specifically, the input/output device 24 includes input devices such as a mouse and a keyboard, and output devices such as a display and a speaker. The input/output device may be an integrated device such as a touch panel display.

In the specific hardware configuration of the company terminal 2, any component may be omitted, replaced, or added as appropriate depending on embodiments similarly to the server device 1.

Software Configurations

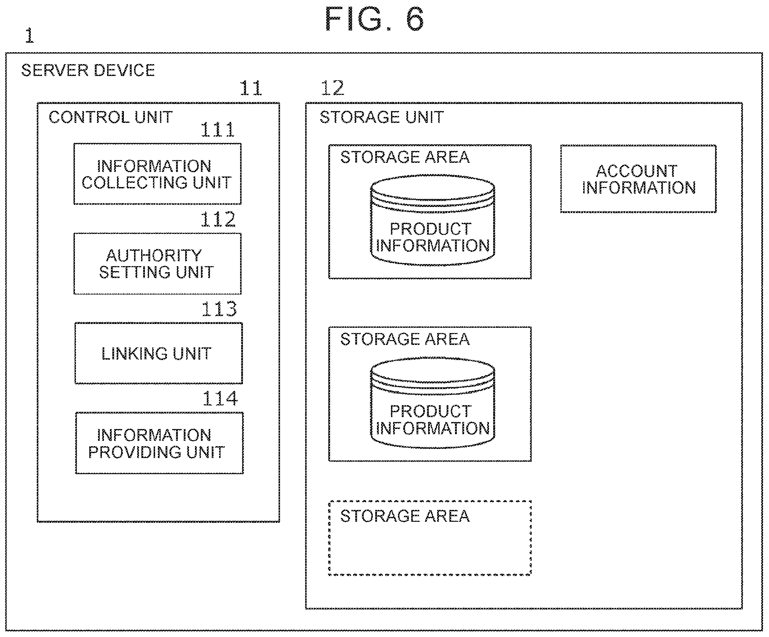

Next, the software configurations of the devices constituting the system will be described. FIG. 6 schematically shows the software configuration of the server device 1 according to the present embodiment. In the present embodiment, the control unit 11 includes four software modules that are an information collecting unit 111, an authority setting unit 112, a linking unit 113, and an information providing unit 114. The software modules may be implemented by the control unit 11 (CPU) executing programs stored in the storage unit 12. Information processing to be executed by the information collecting unit 111, the authority setting unit 112, the linking unit 113, and the information providing unit 114 is synonymous with information processing to be executed by the control unit 11.

The information collecting unit 111 executes a process for receiving product information transmitted from the company terminal 2 and storing the product information in the storage unit 12. The authority setting unit 112 receives information for setting authority to access the product information (hereinafter referred to as "permission information") from the company terminal 2. The authority setting unit 112 executes a process for setting authority to access the product information stored in the storage unit 12 based on the received information.

The linking unit 113 acquires information for linking pieces of product information from the company terminal 2 by interacting with the company terminal 2. The linking unit 113 executes a process for writing information indicating a linking relationship for the pieces of product information stored in the storage unit 12 based on the acquired information. The linking unit 113 executes a process for receiving a request to assign termination information and, in response to the request, assigning the termination information to the product information stored in the storage unit 12. A product tree is formed by reflecting the linking and termination. That is, the product tree is formed by saving the linking information and the termination information in the storage unit 12. The linking unit 113 generates the product tree based on results of the linking and termination.

The information providing unit 114 executes information processing related to the product tree and outputs a result of executing the information processing. The information processing related to the product tree may include a process for performing calculation on traceability of the product tree. The output of the result of executing the information processing may include a process for providing information on the generated product tree to the company terminal 2. In one example, the information providing unit 114 generates information on the product tree and outputs the generated information on the product tree.

In the present embodiment, the storage unit 12 includes a plurality of logical storage areas. Different access authorities can be set in the storage areas, such as an area that the company A is authorized to access, an area that the company B is authorized to access, and an area that both the companies A and B are authorized to access. The authority setting unit 112 sets the access authority by storing the product information received from the company terminal 2 in an appropriate storage area. A specific processing method will be described later.

The storage unit 12 stores account information. In the present embodiment, an operator of each company logs into the server device 1 via the company terminal 2 by using an account of the corresponding company to perform interaction between the server device 1 and the company terminal 2. The account information is information on an account associated with each company constituting the supply chain. The login using an account is an example of access to the server device 1 as a corresponding company. The method for accessing the server device 1 is not limited to such an example, and may be selected as appropriate depending on embodiments.

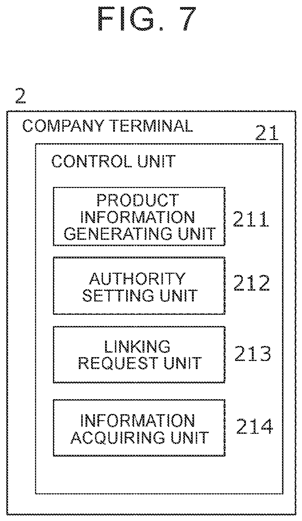

FIG. 7 schematically shows the software configuration of the company terminal 2 according to the present embodiment. In the present embodiment, the control unit 21 includes four software modules that are a product information generating unit 211, an authority setting unit 212, a linking request unit 213, and an information acquiring unit 214. The software modules may be implemented by the control unit 21 (CPU) executing programs stored in the storage unit 22. Information processing to be executed by the product information generating unit 211, the authority setting unit 212, the linking request unit 213, and the information acquiring unit 214 is synonymous with information processing to be executed by the control unit 21.

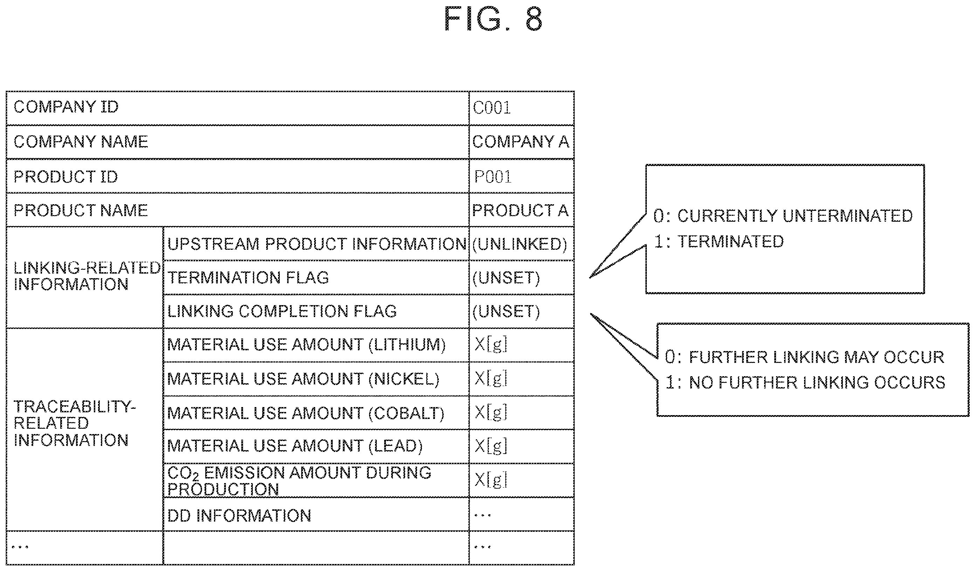

The product information generating unit 211 generates information on a product of a company associated with the company terminal 2 (product information). FIG. 8 shows an example of the product information generated by the product information generating unit 211. The product information may be input via a device operator. In the present embodiment, the product information includes fields for a company identifier (ID), a company name, a product ID, and a product name. The company ID and the company name are an identifier and a name of a company that produces a target product (i.e., the company that uses the company terminal 2). The product ID and the product name are an identifier and a name of the target product.

The product information further includes linking-related information. The linking-related information is information for identifying an upstream product linked to the target product. In the present embodiment, the linking-related information includes fields for "upstream product information", "termination flag", and "linking completion flag".

The upstream product information field stores information for identifying product information associated with the upstream product linked to the target product (i.e., a product necessary for producing the target product and incorporated in the target product). The upstream product information field is used when the server device 1 links products. When the product information is generated, the target product is not basically linked to the upstream product. Therefore, the upstream product information field need not store a value indicating the upstream product.

The termination flag field stores a flag indicating whether the target product is a leaf node in the product tree, that is, a node positioned on the most upstream (terminal end) side. In the present embodiment, the plurality of company terminals 2 transmits pieces of product information. Therefore, this flag is used to determine whether an upstream product is linked to a certain product in the product tree or no more products are linked to the certain product (whether the target product is positioned on the most upstream side). That is, the termination flag field is used when the server device 1 finalizes the linking between products. When the product information is generated, the linking relationship of the target product is basically not finalized. Therefore, the termination flag field may store "0 (currently unterminated)". To finally generate the product tree, the status of the product information of each company stored in the server device 1 is set to "linked to upstream product" or "termination flag is set to 1".

The linking completion flag field stores a flag indicating whether the target product has been linked to the upstream product. In the present embodiment, a certain product in the product tree may be linked to a plurality of upstream products. Examples of such a case include a case where a product C is produced by using a product A and a product B as components. When the target product is positioned at an intermediate node instead of a leaf node, it is difficult to determine whether the linking is completed or another product may further be linked based only on the presence or absence of a linking destination product. Without this determination, the product tree cannot be finalized. The linking completion flag is used to identify this. That is, the linking completion flag is status information indicating whether all the linking is completed. That is, the linking completion flag field is used when the server device 1 finalizes the linking between products. When the product information is generated, the linking relationship of the target product is basically not finalized. Therefore, the linking completion flag field may store "0 (further linking may occur)".

By referring to the termination flag for the product information positioned at the leaf node and the linking completion flag for the product information positioned at the intermediate node, it is possible to determine whether the product information is finalized. The flag stored in the termination flag field (termination flag) is an example of "termination information".

The product information further includes traceability-related information. In one example, the traceability-related information may include amounts of materials (e.g., upstream products) used per production volume of the product, information on a recycling rate of a predetermined raw material, an amount of greenhouse gases emitted when producing the product, due diligence-related information, or a combination thereof. Examples of the predetermined raw material include lithium, nickel, cobalt, lead, and graphite. The recycling rate may be expressed directly or may be expressed indirectly, for example, by a combination of the total use amount and the amount of use of the recycled material. These values are associated with the process of producing the target product. In the example of FIG. 3, the traceability-related information in the product information A stores an amount of greenhouse gases emitted in the production activities of the product A. The traceability-related information in the product information A does not include information on the processes up to the production of the upstream product (e.g., an amount of greenhouse gases emitted until the upstream product B is produced).

The traceability-related information may be selected as appropriate depending on embodiments. In one example, the amount of greenhouse gas emissions (carbon footprint) may include emissions in scope 1, scope 2, and scope 3. Scope 1 may cover an amount of direct greenhouse gas emissions. Scope 2 may cover an amount of indirect emissions along with the use of electricity, heat, and steam supplied by other companies. Scope 3 may cover an amount of indirect emissions other than those in Scope 1 and Scope 2. In one example, the due diligence-related information may be technical documentation on a product containing a target raw material (e.g., cobalt, natural graphite, lithium, or nickel), indicating that responsible mineral sourcing obligations are met for the amount of the raw material contained in the product, a smelter, etc. In another example, the due diligence-related information may include a score indicating the degree to which the obligations are met.

The product information generating unit 211 acquires such information via the operator of the company terminal 2 and transmits it to the server device 1 at any timing.

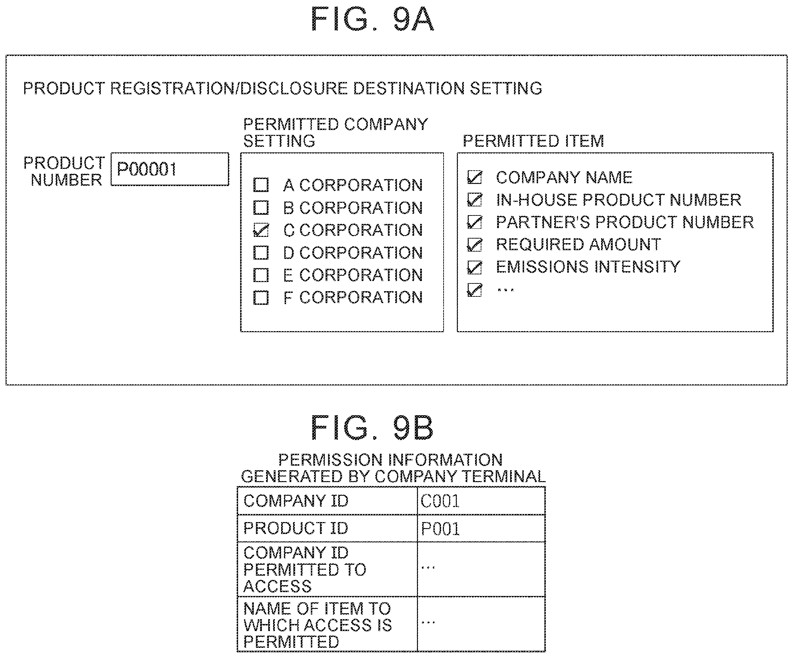

The authority setting unit 212 designates a downstream company that is permitted to access the product information transmitted from the company terminal 2 to the server device 1. FIG. 9A shows an example of a screen output by the authority setting unit 212. As in the illustration, the authority setting unit 212 receives designation of a downstream company that is permitted to access any in-house product. FIG. 9B shows an example of permission information generated by the authority setting unit 212 based on input information. The authority setting unit 212 transmits the permission information to the server device 1 at any timing. The permission information is an example of "permission command". The access authority may be set for each piece of product information or may be set for each item in the product information ("permitted item" in the figure). Thus, partial disclosure can be achieved such that the existence of the product is disclosed but specific information on the materials used, the amount used, etc. is not disclosed.

The list of companies presented on the screen of FIG. 9A may be a list of companies that have records of transaction with the company of interest in the past. Therefore, the server device 1 may store data on past transaction (transaction data) for each company and generate the list of companies based on the transaction data. The transaction data may include, for example, an identifier of a target product, an identifier of a company that produced the product, and a date of transaction.

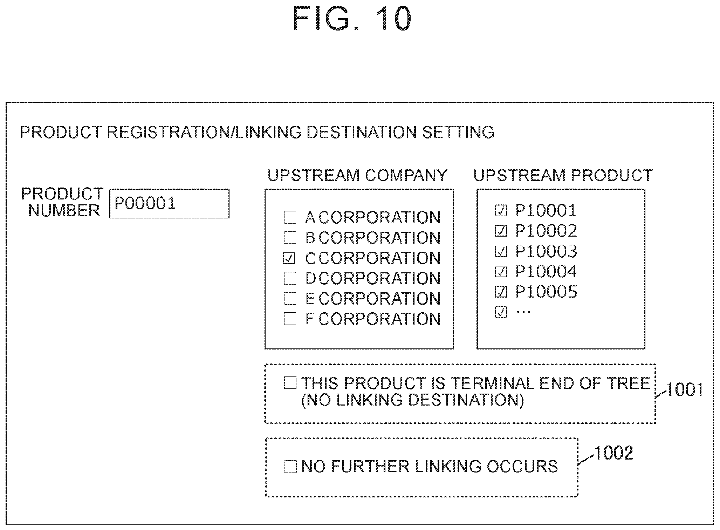

The linking request unit 213 requests the server device 1 to link the in-house product information transmitted to the server device 1 to an upstream product. In one example, the linking request unit 213 first transmits a company ID and a product ID of the company of interest to the server device 1, and requests linking of product information associated with the product ID. The server device 1 generates a user interface including a list of product information (i.e., linking destination candidates) that the target company is permitted to access, and provides the generated user interface to the company terminal 2. FIG. 10 shows an example of the user interface including a list of products that the target company is permitted to access.

The list of products presented in FIG. 10 may be a list of products that have records of transaction with the company of interest in the past. The server device 1 may generate the list based further on the stored transaction data.

Subsequently, the linking request unit 213 prompts the operator to select an upstream product to be linked from the list. The linking request unit 213 transmits, to the server device 1, a pair of an identifier of a linking source product (downstream product) and an identifier of the linking destination upstream product. In response to this, the server device 1 can link the pieces of product information.

When there is no upstream product to be linked to the target product, this fact can clearly be indicated, for example, by marking a checkbox represented by reference numeral 1001 in FIG. 10. In this case, pieces of product information are not linked, and the server device 1 sets the termination flag of the corresponding product information to "1". When there is an upstream product to be linked to the target product, that is, when the node associated with the target product is not a leaf node, the marking operation is prohibited.

When no further linking is performed for the target product, this fact can clearly be indicated by marking a checkbox represented by reference numeral 1002 in FIG. 10. In this case, the server device 1 sets the linking completion flag of the corresponding product information to "1". When the termination flag is set to "1", the corresponding product information is the terminal end, and is therefore excluded from the linking target. In this case, the linking completion flag may be handled in any way. In one example, the linking completion flag may be set to "1" in response to the setting of the termination flag to "1". In another example, the linking completion flag may remain "0" and be ignored when the termination flag is set to "1".

In this way, the linking request unit 213 issues (1) a request to link the target product and the upstream product or (2) a request to assign the termination flag indicating that the target product is the terminal end of the supply chain. When declaring the completion of linking, the linking request may include a request to assign the linking completion flag indicating that no further linking occurs for the target product. The request (1) is an example of "first request", and the request (2) is an example of "second request". Thus, the server device 1 can finalize the state of the product tree.

The information acquiring unit 214 requests the server device 1 to provide the product tree and outputs the information transmitted from the server device 1.

Details of Process

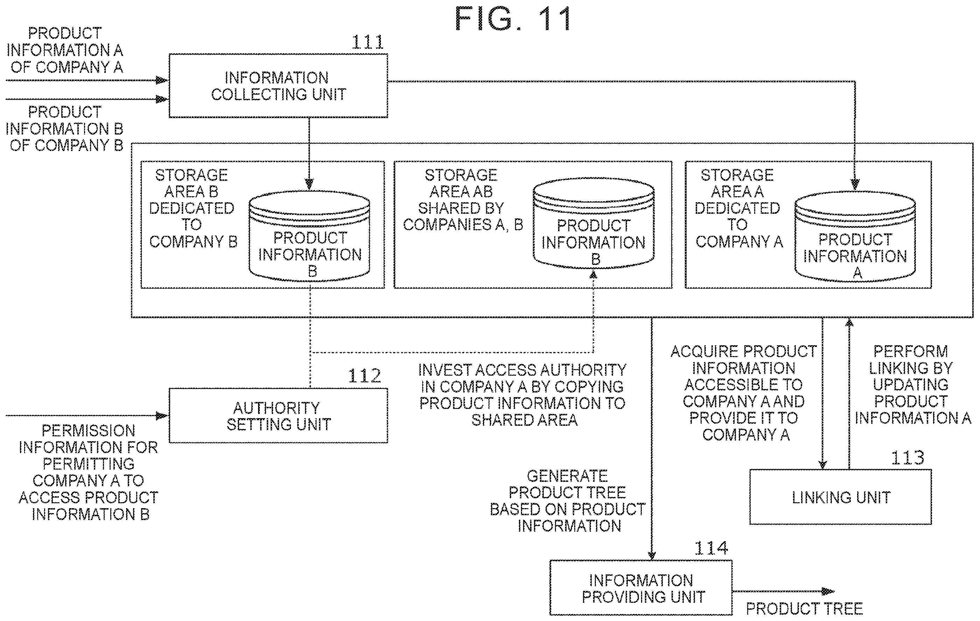

Next, details of a process to be performed by the server device 1 and the company terminal 2 will be described. FIG. 11 shows an example of a flow of a process to be executed by the server device 1 based on a request from the company terminal 2. The process to be performed by the server device 1 can roughly be divided into the following four phases.

(1) First phase for receiving product information transmitted from the company terminal 2 and storing the received product information
(2) Second phase for receiving permission information transmitted from the company terminal 2 and setting authority to access the product information based on the received permission information
(3) Third phase for linking pieces of product information by interacting with the company terminal 2
(4) Fourth phase for providing information on a product tree based on a linking result

In the example of FIG. 11, a company A is a downstream company and a company B is an upstream company. A product produced by the company A will be referred to as "product A", and a product produced by the company B will be referred to as "product B". Product information associated with the product A will be referred to as "product information A", and product information associated with the product B will be referred to as "product information B".

In the first phase, the information collecting unit 111 of the server device 1 acquires product information from the product information generating unit 211 of the company terminal 2. In the example of FIG. 11, the server device 1 acquires the product information A from the company terminal 2 associated with the company A, and acquires the product information B from the company terminal 2 associated with the company B. The information collecting unit 111 saves the product information A in a storage area that only the company A is authorized to access (hereinafter referred to as "storage area A"). The information collecting unit 111 saves the product information B in a storage area that only the company B is authorized to access (hereinafter referred to as "storage area B"). In this way, the information collecting unit 111 saves the product information transmitted from any company in a dedicated storage area that only the company is authorized to access.

In the second phase, the authority setting unit 112 of the server device 1 receives permission information from the authority setting unit 212 of the company terminal 2, and sets authority to access the product information based on the received permission information. As shown in FIG. 9B, the permission information is information in which a product is associated with a company permitted to access product information of the product.

In the example of FIG. 11, it is assumed that the authority setting unit 112 receives permission information indicating that the downstream company A is permitted to access the product information B of the upstream company. In this case, the authority setting unit 112 copies the product information B stored in the storage area B to a storage area that both the companies A and B are authorized to access (hereinafter referred to as "storage area AB"). Thus, the product information B is accessible to both the company A and the company B. When no access authority is set for a specific item in the product information, the item is excluded from the target of copy to the storage area AB.

In the following description, a storage area that only a specific company is authorized to access will be referred to as "dedicated storage area", and a storage area that a plurality of companies is authorized to access will be referred to as "shared storage area".

In this way, the server device 1 copies the product information in response to reception of the permission information from the company terminal 2. That is, the company terminal 2 transmits the permission information to the server device 1 to copy the product information identified by the permission information from the dedicated storage area of the target company to the shared storage area accessible to the downstream company.

In the third phase, the linking unit 113 of the server device 1 receives a linking request from the linking request unit 213 of the company terminal 2, and links the pieces of product information based on the received linking request.

First, the linking unit 113 receives the linking request from the company terminal 2. The linking request is transmitted from the company terminal 2 of the downstream company. In the example of FIG. 11, it is assumed that the company terminal 2 of the company A transmits the linking request. The linking request includes a company ID and a product ID of a target product. The linking unit 113 acquires product information stored in the storage area accessible to the company, and generates a list of the acquired product information. In the example of FIG. 11, the company A can access the product information B stored in the storage area AB. Therefore, the product information B can be selected as a linking destination in the company terminal 2 of the company A.

The linking request unit 213 of the company terminal 2 presents the list to an operator, and prompts the operator to select products to be linked. In this example, the product A and the product B are linking targets. For example, the operator inputs, via the input/output device 24, information indicating that the product B is an upstream product for the product A. The linking request unit 213 transmits data for associating the upstream product (product B) and the downstream product (product A) with each other (linking data) to the linking unit 113.

As described with reference to FIG. 8, the product information includes the field related to the product to be linked (linking-related information). Based on the linking data, the linking unit 113 stores information associated with the product information B (i.e., the upstream product) in the linking-related information of the product information A. For example, the linking-related information stores an identifier of the upstream product and an identifier of the company that produces the upstream product.

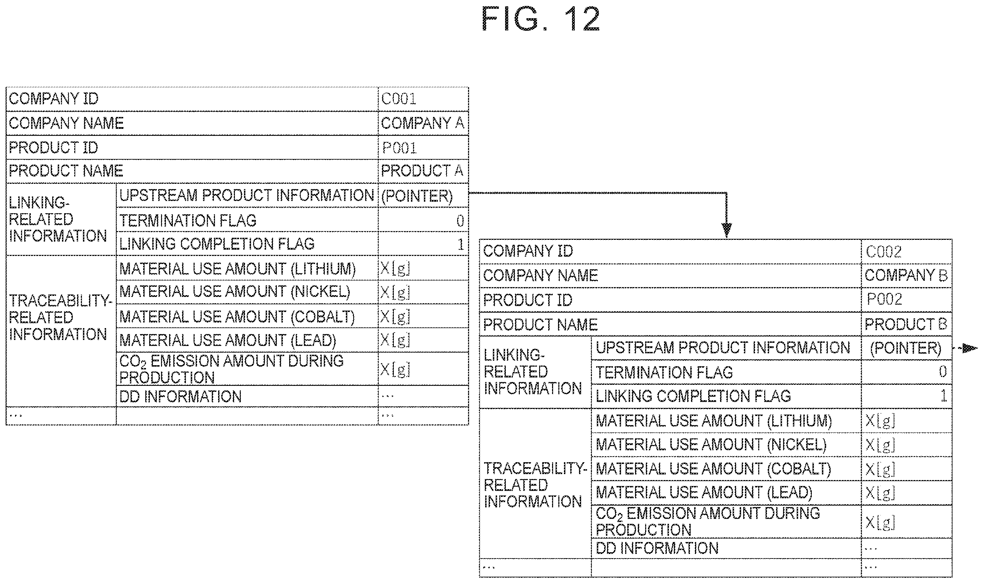

The linking-related information may store, for example, a pointer to the linking destination product information. FIG. 12 illustrates an example in which a plurality of pieces of product information is linked by pointers. Arrows in the figure represent the pointers. The pointer indicates, for example, an address of the product information associated with the upstream product. Through the process described above, a part of the tree structure is formed with the product information of the downstream product as a parent node and the product information of the upstream product as a child node.

No further linking is performed at the terminal end of the product tree. In this case, the linking request unit 213 transmits data indicating that the product is the terminal end of the tree instead of transmitting the linking data. In the example of FIG. 10, the data indicating that the product is the terminal end of the tree is transmitted when the checkbox represented by reference numeral 1001 is marked. When the data is received, the linking unit 113 sets "1" in the termination flag field of the corresponding product information.

When it is clear that no further linking occurs for the target product, the linking request unit 213 transmits data clearly indicating this fact in the linking data. In the example of FIG. 10, data indicating that no further linking occurs for the product is transmitted when the checkbox represented by reference numeral 1002 is marked. When the data is received, the linking unit 113 sets "1" in the linking completion flag field of the corresponding product information. When the termination flag is set, both the flags may be set to "1".

That is, the linking request unit 213 issues one of the following requests to the server device 1 in the third phase.

   (A) "Request to designate the linking destination upstream product (including a request to set the linking completion flag)" (first request)
   (B) "Request to set the termination flag" (second request)

A product tree of a final product is completed when all the companies belonging to the supply chain have been linked or the termination flag has been assigned. This product tree may be formed through any process. In one example, the companies may execute the third phase indiscriminately (referred to as "shotgun method"). With this method, the processing load on the server device 1 can be reduced because there is no need to manage the execution of the third phase. In another example, the third phase may be executed sequentially from the most upstream company (referred to as "bucket brigade method"). In this case, the server device may permit linking in Tier N or setting of the termination flag after linking in Tier N-1 is completed. With this method, the completion of the product tree can be managed easily.

In the fourth phase, the information providing unit 114 of the server device 1 generates information on the product tree based on the stored pieces of product information, and outputs the information on the product tree. The generation of the information on the product tree refers to a process for generating various types of information on the products (e.g., information on traceability and an image showing the linking relationship among the products in a tree diagram) after links between nodes are formed by linking the pieces of product information. This process for generating the information on the product tree is an example of information processing on the product tree. To generate the information on the product tree, it is necessary that all the pieces of product information have been linked and the termination flags of all the leaf nodes have been set to "1". The information providing unit 114 can appropriately generate the information when such conditions are satisfied.

As described with reference to FIG. 2, the product tree in the present embodiment is a tree diagram showing the supply relationships among the pieces of product information in the supply chain. The information providing unit 114 can generate the image showing the tree diagram based on the pieces of product information.

When generating the information on the product tree, the information providing unit 114 integrates the pieces of traceability-related information defined in the pieces of product information, and outputs a result of the integration.

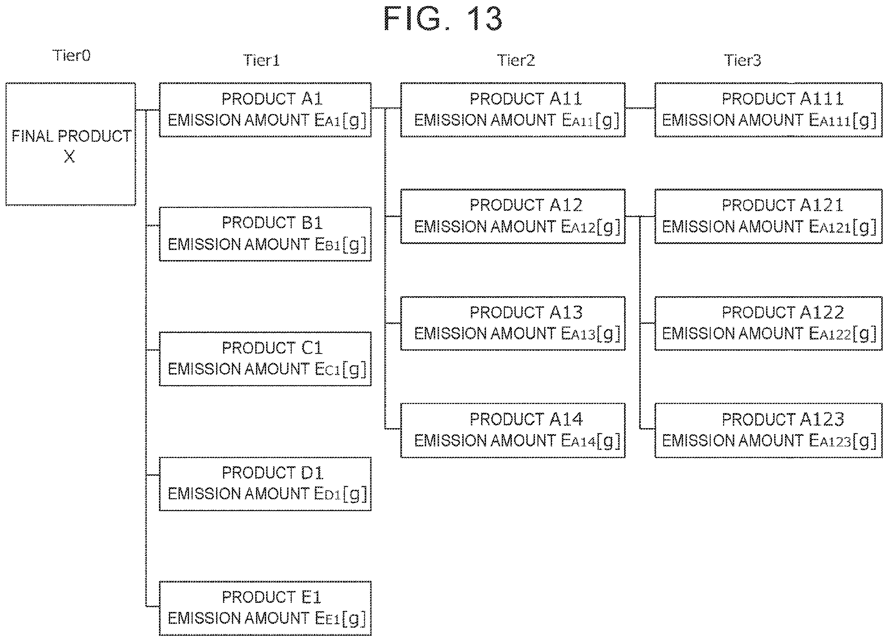

The integration of the pieces of traceability-related information will be described with reference to FIG. 13. FIG. 13 illustrates a plurality of products constituting the final product X and the amounts of carbon dioxide ($CO_2$) emitted in individual processes for producing the products. For example, it is assumed that $E_{A12}$ [g] of carbon dioxide is emitted in a process for producing the product A12 in the figure. It is also assumed that this product is composed of three upstream products A121 to A123. An upstream product included in a certain product will be referred to also as "incorporated product". The total amount of carbon dioxide emitted until a certain target product is produced can be obtained by repeating a process of transferring the amount of $CO_2$ emission associated with an upstream product to a downstream product while referring to the product information between companies at two adjacent hierarchical levels from the most upstream product at the leaf node to the target product.

When the target product is A12 in the example of FIG. 13, the total amount of carbon dioxide emitted until the product A12 is produced can be calculated by summing the amounts of $CO_2$ emission associated with the incorporated products (upstream products A121 to A123) and the amount of $CO_2$ emission associated with the product A12. That is, the integrated amount of $CO_2$ emission for the product A12 is as follows.

$$I_{A12} = E_{A12} + E_{A121} \times U_{A121} + E_{A122} \times U_{A122} + E_{A123} \times U_{A123} \text{ [g]}$$

In this expression, $E_{A121}$, $E_{A122}$, and $E_{A123}$ are $CO_2$ emissions per unit amount when the products A121, A122, A123 are produced, respectively. Further, $U_{A121}$, $U_{A122}$, and $U_{A123}$ are the amounts of use of the products A121, A122, A123 in the production of the product A12, respectively. This use amount is an example of the amount of material used per production volume of the product in the traceability-related information. The amount of $CO_2$ emission of the final product (product of the most downstream company) can be obtained by sequentially executing the above calculation from the product of the most upstream company to the final product.

The same applies to a case where the target product is the product A1. When the target product is A1, the total amount of carbon dioxide emitted in the manufacturing activities until the product A1 is produced can be calculated by integrating the amount of $CO_2$ emission associated with the product A1 and the amounts of $CO_2$ emission associated with the incorporated products A11, A12, A13, A14.

The integrated value may be stored in the storage unit 12 separately from the product information or may be included as a part of the product information. That is, the product information associated with the product A12 may hold both $E_{A12}$ that is the emission amount in the process alone and $I_{A12}$ that is the integrated emission amount.

Post-integration traceability-related information is reused when performing integration for a downstream product. By executing this process at each hierarchical level starting from the most upstream side, the traceability-related information (e.g., the cumulative value of the amounts of $CO_2$ emission) is sequentially transferred in the downstream direction. When the traceability-related information is finally transferred to the final product, the traceability-related information associated with the entire period until the final product is produced (e.g., the total amount of $CO_2$ emission) can be obtained.

The product information referred to when integrating the pieces of traceability-related information may be stored in both the dedicated storage area and the shared storage area. In this case, it is preferable to refer to the product information stored in the dedicated storage area. This is because items that the downstream company is not permitted to refer to may be omitted from the product information stored in the shared storage area.

When the target product information is stored in both the dedicated storage area and the shared storage area, it is preferable to write the result of the integration to the shared storage area. This is because the downstream company cannot refer to the result of the integration if it is written to the dedicated storage area. By writing the result of the integration to the shared storage area, the downstream company having access authority can refer to the result of the integration. The downstream company can refer to the result of the integration, and cannot refer to the traceability-related information specific to the upstream product (e.g., the amount of $CO_2$ emission in the production process of the upstream product) because it is not written to the shared storage area unless otherwise permitted by the upstream company (e.g., in the screen of FIG. 9A).

In this way, when generating the information on the product tree, the information providing unit 114 repeats the process of sequentially integrating the pieces of traceability-related information defined in the pieces of product information from the most upstream side to the most downstream side. In the above example, the amount of carbon dioxide emission is exemplified as the integration target, but the traceability-related information that is the integration target may be a recycling rate related to a predetermined raw material, a score related to due diligence, etc. When the traceability-related information is a numerical value, the integration may be performed by numerical calculation. When the traceability-related information is non-numerical information (e.g., due diligence-related information), the integration may simply be information collection.

The traceability-related information need not be included in the product information. For example, the product information may include information indicating the location of the traceability-related information of the corresponding product (hereinafter referred to as "location information"; typically address or pointer). In this case, the integration may be collection of the location information included in the product information.

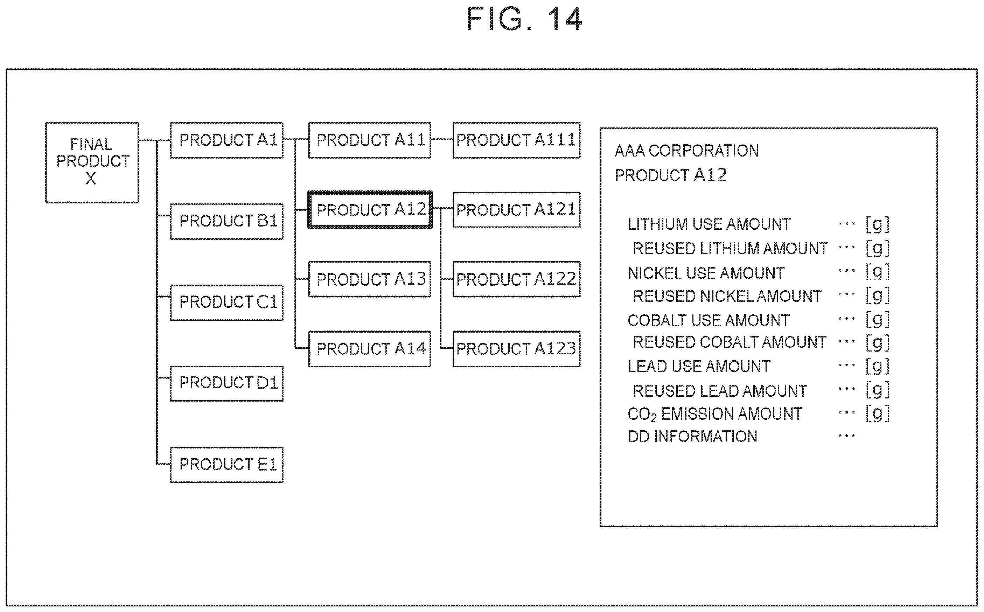

The information providing unit 114 may output the generated product tree in an image format. The information providing unit 114 may simultaneously output the traceability-related information associated with any product. FIG. 14 shows an example of a screen in which the product tree is output as an image. The illustrated screen includes an image showing a tree diagram of the supply relationships among the products constituting the final product. When any product is selected, the traceability-related information associated with the product or the result of the integration of the pieces of traceability-related information associated with the entire period until the product is produced (e.g., the total amount of carbon dioxide emission from the most upstream side) can be viewed. Such information can be output via the input/output device 14 of the server device 1 based on an operation performed by the operator of the server device 1.

The information providing unit 114 may provide the generated product tree to the company terminal 2 in response to a request from the company terminal 2 (information acquiring unit 214). It may be inappropriate to disclose the entire product tree to a specific company. Therefore, when providing the product tree to the company terminal 2 associated with a certain company, the information providing unit 114 may perform a process for hiding a range that the company is not authorized to access.

In the example of FIG. 13, it is assumed that the information providing unit 114 receives a product tree disclosure request from the company terminal 2 associated with the company that produces the product A12. It is assumed that the company is authorized to access only the products A121, A122, A123. That is, the company cannot access product information other than those of the three products and the downstream product A1. In this case, the information providing unit 114 provides the company terminal 2 with the product tree in which pieces of information on products without access authority are hidden.

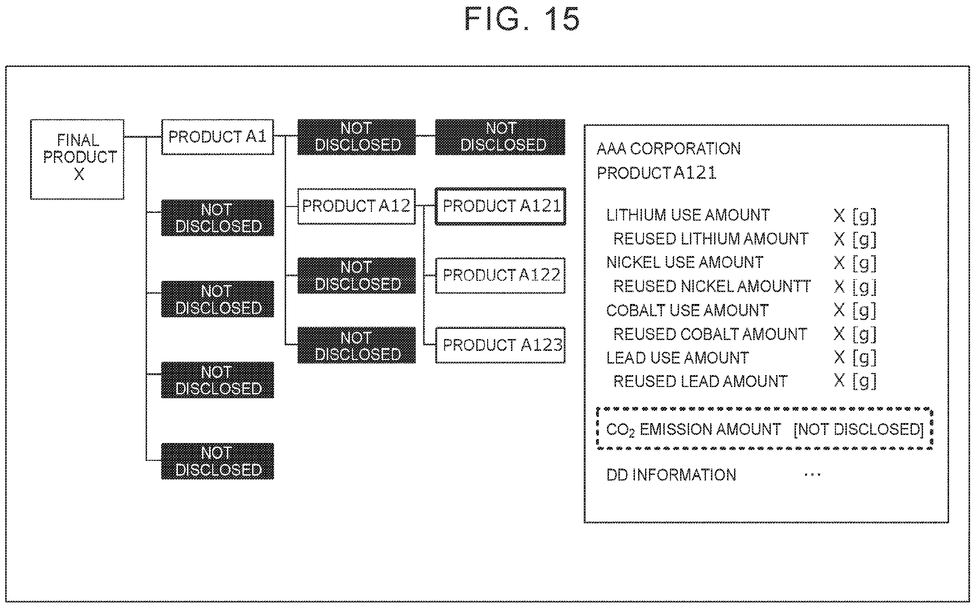

FIG. 15 shows an example of the product tree in the case where the products without access authority are hidden. In this example, the product tree is displayed with detailed information (or existence) concealed for undisclosed products.

In a case where the existence of a product is disclosed but access authority is not invested only for a specific item in the corresponding product information, the concealing process is performed only on the specific item as indicated by a dotted line in the figure. In the illustrated example, the amount of carbon dioxide emission when the product A121 is produced is hidden.

Even if the tree includes products (or items) without access authority, the pieces of traceability-related information are integrated without being affected by this. In the illustrated example, the amount of carbon dioxide emission for the product A121 is hidden, but the process of calculating the total amount of carbon dioxide emission for the product A12 is not affected.

Processing Flow

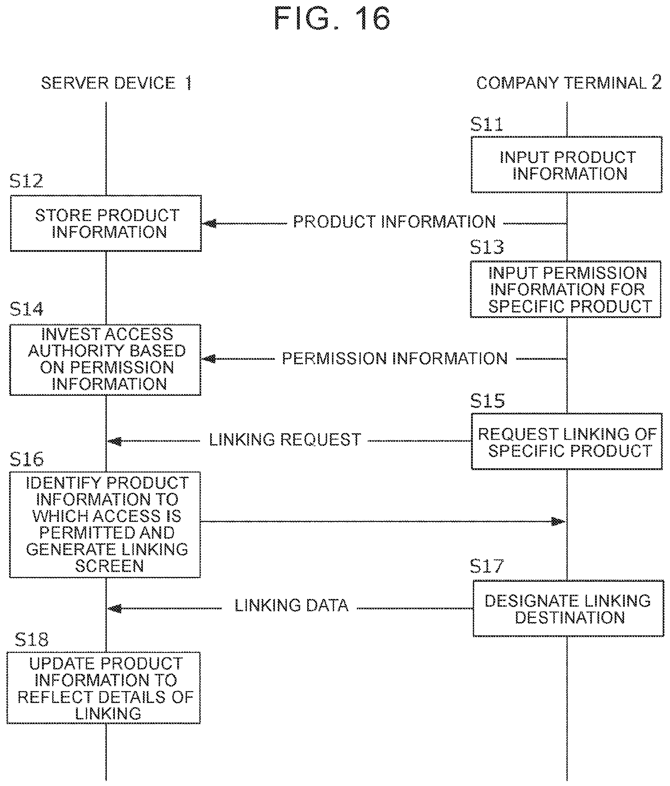

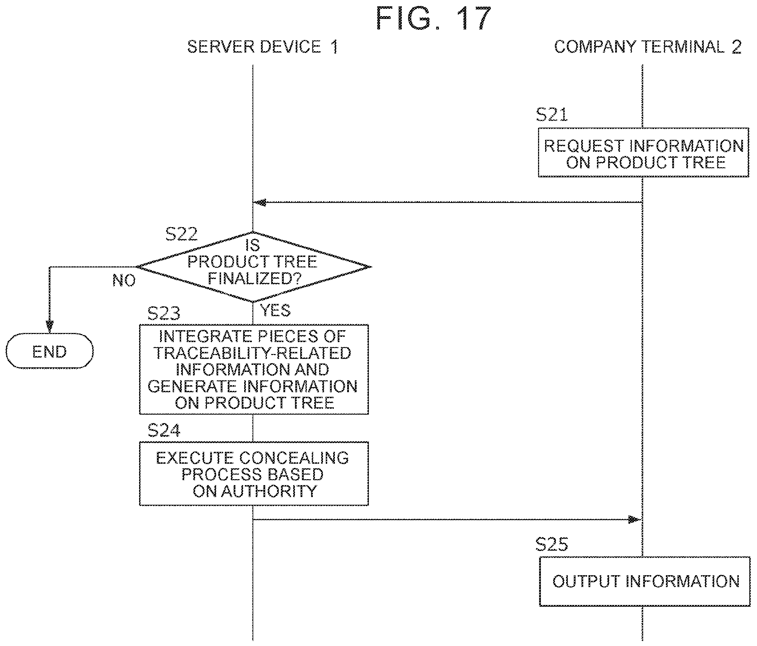

Next, a flow of a process to be executed by the server device 1 and the company terminal 2 will be described with reference to FIGS. 16 and 17. FIG. 16 is a sequence diagram corresponding to the first to third phases.

In one example, the interaction between the server device 1 and the company terminal 2 is started when the operator of each company logs into the server device 1 via the company terminal 2 by using the account of the corresponding company. In this example, it is assumed that the operator of each company logs into the server device 1 by using the company's account.

In step S11, the product information generating unit 211 of the company terminal 2 first acquires the in-house product information via the operator, and transmits the acquired product information to the server device 1. The transmitted product information is received by the server device 1 (information collecting unit 111) and stored in the storage unit 12 (step S12). At this time, the information collecting unit 111 saves the product information in a storage area that only the company that produces the corresponding product is authorized to access.

In step S13, the authority setting unit 212 of the company terminal 2 receives, via the operator, input of information for designating a downstream company permitted to access the product information transmitted in step S11 (permission information). In this step, the user interface screen described with reference to FIG. 9A may be provided to designate a combination of any product and a downstream company permitted to access the product information. The input permission information is transmitted to the server device 1.

In step S14, the authority setting unit 112 of the server device 1 invests authority to access the target product information based on the received permission information. In this step, as described with reference to FIG. 11, the authority setting unit 112 invests any company with authority to access any product information by copying the target product information to a storage area that a plurality of companies is authorized to access. When there is no storage area with appropriate access authority, a process of creating a new storage area and investing access authority in an appropriate company may be performed.

Additional information may be assigned when copying the product information in this step. For example, product information generated by an upstream company may include a product number. Since the product number is used by the upstream company, it may not be used by a downstream company as it is. For example, a product number to be used by the downstream company may be added to the copy target product information as the additional information.

In step S15, the linking request unit 213 of the company terminal 2 transmits data for requesting the server device 1 to link the product information transmitted to the server device 1 to an upstream product (linking request). The linking request includes a company ID of the company and a product ID of the target product.

In step S16, the server device 1 (linking unit 113) generates a list of products that the target company is permitted to access, and provides the company terminal 2 with a user interface screen including the list. The list of products that the target company is permitted to access can be extracted from the pieces of product information stored in the storage area that the company is authorized to access. In this step, the server device 1 may provide the company terminal 2 with the user interface screen described with reference to FIG. 10 to designate a combination of any product and an upstream product to be linked to the product.

In step S17, the linking request unit 213 of the company terminal 2 receives, from the operator, designation of a combination of the target product and the upstream product to be linked to the target product. The linking request unit 213 generates data indicating association between the upstream product and the downstream product (linking data), and transmits the generated linking data to the server device 1.

In step S18, the linking unit 113 of the server device 1 updates the stored pieces of product information based on the linking data to reflect the details of the linking between the pieces of product information. The pieces of product information may be linked by storing information (identifier, pointer, etc.) on the upstream product in the linking-related information in the product information of the downstream product.

When there is no downstream company, the process of steps S13 and S14 may be omitted. Similarly, when there is no upstream company (when there is no linking destination for the target product), the process of setting the termination flag may be executed instead of requesting the linking of pieces of product information. In this case, the process of steps S15 to S18 is omitted.

FIG. 17 is a sequence diagram corresponding to the fourth phase. In step S21, the company terminal 2 (information acquiring unit 214) first requests the server device 1 to provide information on a product tree. The request includes, for example, an identifier of the target product. The target product may be a final product or any other product (intermediate product).

The server device 1 (information providing unit 114) that has received the request determines whether the product tree is finalized (step S22). In this step, determination is made that the product tree is finalized when the following condition is satisfied.

(Condition 1) The termination flags are set to "1" for the pieces of product information at all the leaf nodes

When the termination flags are set for all the leaf nodes, the product tree is finalized.

When even one of the leaf nodes in the product tree does not meet the above condition, further linking may occur for the target product. In this case, the server device 1 (information providing unit 114) may return the determination result to the company terminal 2 and then terminate the process.

Next, the server device 1 (information providing unit 114) generates information on the product tree through the above process (step S23). At this time, the information providing unit 114 executes the process of integrating pieces of traceability-related information defined in the pieces of product information from the most upstream side to the most downstream side. The result of the integration is reflected in each piece of product information.

In step S24, the process of concealing information without access authority is executed based on the access authority invested in the target company. For example, when the existence of product information of another company is not disclosed for a certain company, a process of concealing the existence of the product information is executed. When only a specific item in the product information is not disclosed, a process of concealing details of the item is executed. Information on the product tree subjected to the concealing process is provided to the company terminal 2 (information acquiring unit 214) and is output.

In the present embodiment described above, in the system that collects pieces of product information from the company terminals 2 and generates a product tree, designation of a downstream company permitted to access information on an in-house product is received from each company terminal 2, and pieces of product information are linked based on this designation. Access to the product information is controlled by storing the product information in a plurality of storage areas that each company is authorized to access. When providing the product tree to each company terminal 2, the information concealing process is executed within the range of the access authority of each company. With such a configuration, it is possible to collect pieces of information over the entire supply chain while maintaining confidentiality.

The server device 1 according to the present embodiment holds information indicating whether each piece of product information is the terminal end of the product tree. Thus, the server device 1 can determine whether the product tree is completed.

Modification of First Embodiment

In the first embodiment, determination is made that the product tree is finalized when the termination flags are set to "1" for the pieces of product information at all the leaf nodes. However, further linking may occur for a product that has been linked at an intermediate node. For example, when a certain downstream product is linked to one upstream product, it may further be linked to second and subsequent upstream products.

In consideration of such a case, the determination may be made in step S22 by using the following condition in addition to condition 1.

(Condition 2) The linking completion flags are set to "1" for the pieces of product information at all the nodes other than the leaf nodes

By using both conditions 1 and 2, it is possible to guarantee that the product tree is finalized.

Second Embodiment

In the first embodiment, the server device 1 stores the pieces of account information of the companies in the supply chain, and the company terminals 2 log into the server device 1 by using the pieces of account information.

When participation in and withdrawal from the supply chain occur frequently, there is a possibility that the account information cannot be registered in the server device 1 at an appropriate timing. For example, when a downstream company wishes to link the in-house product to an upstream product but the account information of the upstream company is not registered in the system, the linking cannot be performed. This is because there is neither product information associated with the upstream product nor access permission for the upstream product. To address this issue in the second embodiment, account information of a company newly participating in the supply chain is registered based on a request from a company already participating in the supply chain.

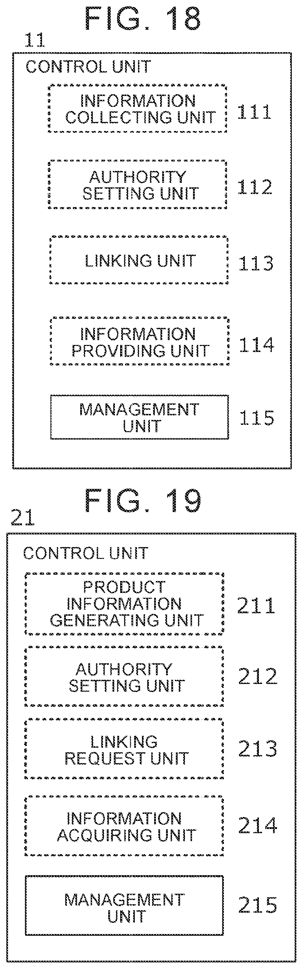

FIG. 18 shows the software configuration of the server device 1 (control unit 11) according to the second embodiment. FIG. 19 shows the software configuration of the company terminal 2 (control unit 21) according to the second embodiment. In the second embodiment, the server device 1 (control unit 11) further includes a software module of a management unit 115. This functional module may be implemented by the control unit 11 (CPU) executing a program stored in the storage unit 12. In the second embodiment, the company terminal 2 (control unit 21) further includes a software module of a management unit 215. This functional module may be implemented by the control unit 21 (CPU) executing a program stored in the storage unit 22.

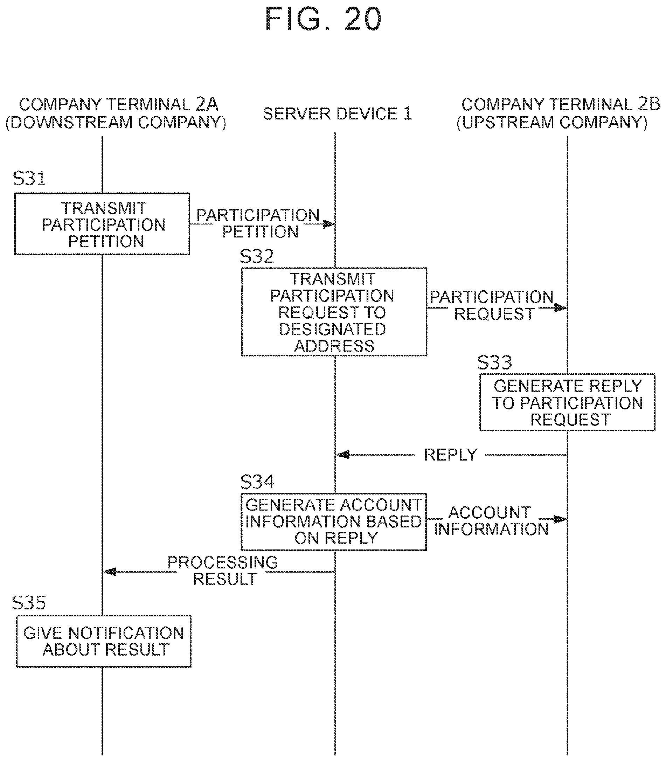

FIG. 20 is a sequence diagram illustrating a process to be performed by the server device 1 and the company terminals 2 in the second embodiment. A company terminal associated with a downstream company will be referred to as "company terminal 2A", and a company terminal associated with an upstream company will be referred to as "company terminal 2B". It is assumed that the upstream company participates in the supply chain but the account information is not registered in the server device 1.

When the downstream company wishes to link the in-house product to an upstream product, it is necessary to first register the account information of the upstream company in the server device 1 and then prompt an operator of the upstream company to register product information of the upstream product and permission information.

In step S31, the company terminal 2A (management unit 215) first transmits a participation petition to the server device 1. The participation petition includes information for identifying the upstream company and contact information (e-mail address etc.) of the upstream company. The server device 1 (management unit 115) that has received the participation petition transmits a participation request to a designated address (step S32). The participation request includes guidance on registration of account information.

The participation request is received by the company terminal 2B (management unit 215). The management unit 215 of the company terminal 2B outputs guidance to the operator based on the received participation request, and receives, from the operator, a reply including whether to participate in the system. The reply is transmitted to the server device 1 (management unit 115).

When the reply indicates that "participation is possible", the server device 1 (management unit 115) generates account information associated with the upstream company, notifies the company terminal 2B about the account information, and notifies the company terminal 2A about the result (step S34). When the reply indicates that "participation is impossible", the server device 1 (management unit 115) notifies the company terminal 2A about the result.

The company terminal 2A outputs the result received from the server device 1 (step S35). Thus, the operator of the downstream company can know that the upstream company participates (or does not participate) in the system. The upstream company can, for example, register the product information, register the permission information, or link the product information by using the registered account information.

Third Embodiment

In the first embodiment, the server device 1 determines in step S22 whether the state of the product tree is finalized. In the third embodiment, when the state of the product tree is not finalized, the server device 1 transmits an alert to a company terminal 2 associated with a product that causes this situation.

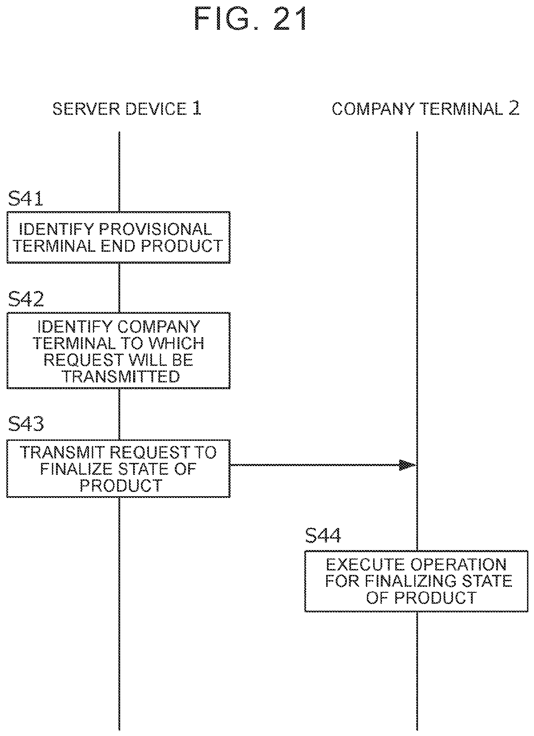

In the third embodiment, when the server device 1 determines in step S22 that the state of the product tree is not finalized, a process shown in FIG. 21 is executed instead of terminating the process. FIG. 21 is a sequence diagram of the process to be executed when the server device 1 determines in step S22 that the state of the product tree is not finalized.

In step S41, the server device 1 first identifies a provisional terminal end product. The provisional terminal end product is a product that is positioned at a leaf node of the product tree and may no longer be the leaf node in the future. Specifically, the provisional terminal end product is a product that is positioned at a leaf node and has a termination flag other than "1".

In step S42, the server device 1 identifies a company terminal 2 to which an alert will be transmitted. The company to which the alert will be transmitted is a company that has authority to make the first and second requests for the product information of the provisional terminal end product, and is typically a company that produces the provisional terminal end product.

In step S43, the server device 1 generates the alert and transmits it to the company terminal 2 identified in step S42. The alert includes guidance indicating that the state of the target product is not finalized. The alert requests (demands) a process of "setting the termination flag" or "completing the linking of the upstream product". The completion of the linking of the upstream product includes not only the linking of the upstream product (e.g., using the screen of FIG. 10), but also declaration that no further linking is performed (e.g., marking the checkbox 1002).

In step S44, the company terminal 2 that has received the alert outputs details thereof. The operator of the company terminal 2 who has viewed the details of the alert accesses the server device 1 and executes an operation for finalizing the state of the target product. When an upstream company that produces a linking destination product does not participate in the system, a participation petition may be transmitted to the upstream company as described in the second embodiment.

According to the third embodiment described above, the server device 1 can provide a prompt to finalize the state of the product tree.

In the present embodiment, the company that produces the provisional terminal end product is exemplified as the company to which the alert will be transmitted. However, the alert may be transmitted to any other company as long as it has authority to make the first and second requests for the product information of the provisional terminal end product. For example, the company associated with the product information constituting the product tree may be a virtual company or a company whose name and existence are concealed. In this case, the alert may be transmitted to an existing company that manages such a company.

The company to which the alert will be transmitted need not be the company that has authority to make the first and second requests for the product information of the provisional terminal end product. For example, when there are a first company that has authority over the product information of the provisional terminal end product and a second company that manages this company, the alert may be transmitted to the second company. In this case, the company that has received the alert may issue a reminder to the first company under its management to finalize the state of the product. Data indicating the relationship between such companies may be held in the server device 1.

In the present embodiment, the determination as to whether the product tree is finalized (step S22) is made based on the request from the company terminal 2, but may be made actively by the server device 1. For example, the determination may be made periodically and, when determination is made that the product tree is finalized, any company terminal 2 (e.g., the company terminal 2 associated with the OEM company that finally assembles the product) may be notified about this fact.

The determination as to whether the product tree is finalized may be made in response to a request from the company terminal 2 associated with the most downstream company (OEM product company). In this case, the company terminal 2 associated with the most downstream company may transmit the alert to a target company. In this case, however, there is a possibility that the most downstream company is not authorized to access the specified provisional terminal end product. In this case, the most downstream company cannot know the company to which the alert will be transmitted.

One solution is to relay the alert via other companies on a path between the provisional terminal end product and the most downstream company. Specifically, the product tree is traced in a direction from the leaf node associated with the provisional terminal end product to the root node to identify most upstream product information that the most downstream company is permitted to access. When the product information that the most downstream company is permitted to access can be identified, the alert is transmitted to an account of a company that has the product information (viewing-permitted company). The company that has received the alert relays the alert to a company positioned on the upstream side. Thus, the alert can be delivered to a company that has authority over the provisional terminal end product. With this method, each company can take measures to finalize the product tree based on the instruction from the most downstream company.

In the present embodiment, the server device 1 generates the alert in response to the presence of the provisional terminal end product (i.e., the product that is positioned at the leaf node but has the termination flag remaining unset), but may generate the alert in response to the presence of a product that has not been linked. For example, when there is a product that is positioned at a node other than the leaf node and has the linking completion flag remaining unset, the product may be handled similarly to the provisional terminal end product.

Modifications

The above embodiments are merely illustrative, and the present disclosure may be modified as appropriate without departing from the spirit and scope of the present disclosure. For example, the processes and means described in the present disclosure can be combined as desired as long as no technical contradiction occurs.

In the description of the embodiments, the server device 1 stores the product information in the database, but the product information may be stored by means other than the database.

The description of the embodiments is directed to the form in which the server device 1 completes the product tree by executing the first to fourth phases. However, the roles of the server device 1 may be distributed among a plurality of company terminals 2. For example, the product information may be stored in a distributed database using blockchain infrastructure. In this case, a plurality of company terminals 2 may construct the product information database. In this case, smart contracts may be used to execute the processes in the individual phases. For example, the process in the second phase may be executed in response to writing of permission information to the database with an account of a certain company. The process in the third phase may be executed in response to writing of a linking request to the database with an account of a certain company.

The storage areas that store the pieces of product information may be distributed among a plurality of company terminals 2. In this case, the dedicated storage area may be provided only in the company terminal 2 of the corresponding company. The shared storage area may be distributed among a plurality of company terminals 2 related to sharing.

The description of the embodiments is directed to the example in which the companies adjacent in the supply chain are permitted to access any product information. However, companies that are not adjacent in the supply chain may share the product information. For example, companies that do not have a direct transaction relationship may share specific product information when the companies need to share information for the purpose of legal compliance. Even in this case, a shared storage area that the companies are authorized to access is provided and necessary data is copied as in the first embodiment. The shared storage area can be generated based on permission of the company whose product information will be referred to. Secret keys may be used for access control on the dedicated storage areas and the shared storage area. In this case, electronic authentication of access control may be performed by public key infrastructure. When blockchain infrastructure is used for each storage area, the access control may be executed by smart contracts.

In the description of the embodiments, the second phase is started by transmitting the permission information from the company terminal 2 of the upstream company to the server device 1. However, the second phase may be started by the company terminal 2 of the downstream company. In this case, the company terminal 2 of the downstream company may transmit, to the server device 1, information for requesting authority to access the upstream product (permission request), and the company terminal 2 of the upstream company may generate permission information in response to this. The company terminal 2 of the downstream company may simultaneously transmit the permission request and linking data to the server device 1. When the downstream company can identify the linking destination product (by product number etc.), the linking data may be transmitted from the downstream company prior to investment of the access authority.

The setting of the authority to access the storage area may be implemented by the operating system of the server device 1 or by any other authentication system. For example, a public key cryptosystem may be used. When the system is implemented by using blockchain infrastructure, the access authority may be invested by using an electronic key.

In the description of the embodiments, the phase in which the server device 1 receives product information on an upstream product and the phase in which the server device 1 receives permission information associated with the product information are described separately, but both of them may be received simultaneously. In the description of the embodiments, the phase in which the server device 1 receives product information on a downstream product and the phase in which the server device 1 receives a linking request associated with the product information are described separately, but both of them may be received simultaneously.

In the above embodiments, the companies in the supply chain are described as companies that produce products. However, the companies in the supply chain need not be the companies that produce products. For example, companies that transport, import, store, or wholesale products may also be included in the companies constituting the supply chain. In one example, some of the companies may be companies that do not execute manufacturing processes, such as trading companies, sales agents, or import agents, and may receive products from companies positioned one level higher (upstream companies) and deliver the products to companies positioned one level lower (downstream companies).

In the above embodiments, the supply chain of automotive products is assumed, the OEM is described as the most downstream company, and the companies that supply components, materials, assemblies, etc. are described as the suppliers. However, the companies belonging to the supply chain are not necessarily limited to these companies. The company in each stage may be determined as appropriate depending on the product etc. The manufacturing activities performed by the companies until the final product is obtained may be determined as appropriate depending on embodiments, and may include all activities that can be performed until the final product is obtained, such as excavation, machining, assembling, transportation, and storage.

In the above embodiments, the access control on each company is implemented by providing the dedicated storage area and the shared storage area. However, the method for implementing the access control is not limited to such an example. Any method may be used for the access control.

The description of the embodiments is directed to the form in which an upstream company invests a downstream company with authority to access product information (second phase) and then the downstream company requests the server device 1 to link pieces of product information (third phase). However, these processes may be executed continuously based on a request from the downstream company.

For example, the company terminal 2 of the downstream company transmits, to the server device 1, a request including information for designating a combination of a downstream product and an upstream product to be linked (hereinafter referred to as "disclosure request"). The request is made to request the upstream company to invest authority to access the upstream product and to request the server device 1 to link the pieces of product information.

The server device 1 that has received the disclosure request transfers the disclosure request to the company terminal 2 of the upstream company and, in response to this, the company terminal 2 of the upstream company executes the process of step S13 shown in FIG. 16. In one example, the server device 1 that has received the permission information executes the process of step S14 and also executes the process of step S18 without waiting for the linking request. That is, the disclosure request may include the linking request. In step S18, the server device 1 executes a process for linking the pieces of product information identified by the disclosure request. In this way, a part of the process shown in FIG. 16 can be omitted.

In another example, the server device 1 may notify the company terminal 2 of the downstream company about the result of step S18 that is automatically executed. Alternatively, the server device 1 may transmit a notification for requesting permission to execute step S18 to the company terminal 2 of the downstream company before step S18 is automatically executed. The server device 1 may execute step S18 based on a permission response from the company terminal 2 of the downstream company. In still another example, the server device 1 may execute the process of step S18 in response to the linking request from the company terminal 2 of the downstream company even when the disclosure request has been made. That is, the disclosure request need not include the linking request.

In the description of the embodiments, it is assumed that the upstream company and the downstream company are different companies, that is, the upstream product and the downstream product are produced by different companies. In the above embodiments, the most upstream company may be the upstream company, and the most downstream company may be the downstream company. Each company other than the most upstream company and the most downstream company may be both the upstream company and the downstream company. Therefore, in the second phase, the company terminal 2 of each company may set its company (target company) as the upstream company and transmit, to the server device 1, a permission command including designation of its downstream company permitted to access product information on the in-house product. The in-house product is an example of a first target product of the target company, and the product information on the in-house product is an example of first product information on the first target product. In response to this, the server device 1 may set the access authority. In the third phase, the company terminal 2 of each company may set its company as the downstream company and transmit, to the server device 1, a termination flag setting request or a linking request including selection of product information to be linked to the product information on the in-house product from among pieces of product information that the company is permitted by its upstream company to access. In this case, the in-house product is an example of a second target product of the target company, and the product information on the in-house product is an example of second product information on the second target product. In response to this, the server device 1 may process the linking or the termination flag. The first target product (target of access permission) and the second target product (target of linking or termination flag assignment) may be the same or different. When the first target product and the second target product are the same, the first product information and the second product information may be the same. When the first target product and the second target product are different, the first product information and the second product information may be different.

The above embodiments show the example of calculation of the amount of $CO_2$ emission (Carbon Footprint of Products (CFP) value). The CFP value may be calculated by the following calculation formula.

Tier N-1 CFP value = Tier N-1 in-house measured CFP value + $\Sigma_k$ (CFP value of company k (Tier N) $\times$ use amount uk in Tier N-1 In this formula, the "Tier N-1 CFP value" indicates a result of integrating the CFP value of the upstream company (company k (Tier N)) and the CFP value of the company of interest. The in-house measured CFP value indicates a CFP value included in the product information of each company. When Tier N is the most upstream company, a "Tier N CFP value" is a CFP value included in the product information of this company. In other cases, the "Tier N CFP value" is a result of integrating a CFP value of an upstream company (Tier N+1) and the CFP value included in the product information of the company of interest. When Tier N is set as the most upstream company (terminal end company) and the calculation is repeated until N = 1, the CFP value of a Tier 0 product (= final product) can be obtained.

In the above embodiments, the server device 1 may calculate the recycling rate and the due diligence (score) together with or instead of the calculation of the amount of $CO_2$ emission (CFP value). The recycling rate may be calculated by the following calculation formula.

"(Recycling rate of target substance in Tier N-1 product) = {(total use amount in Tier N-1) $\times$ (recycling rate in Tier N-1) + $\Sigma_k$ (total use amount in company k (Tier N) $\times$ recycling rate in company k (Tier N) $\times$ use amount $u_k$ in Tier N-1)} $\div$ {total use amount in Tier N-1 + $\Sigma_k$ (total use amount in company k (Tier N) $\times$ use amount $u_k$ in Tier N-1)} = {recycled material use amount in Tier N-1 + $\Sigma_k$ (recycled material use amount in company k (Tier N) $\times$ use amount $u_k$ in Tier N-1)} $\div$ {total use amount in Tier N-1 + $\Sigma_k$ (total use amount in company k (Tier N) $\times$ use amount $u_k$ in Tier N-1)}" The recycled material use amount indicates an amount of the recycled material used in the target substance. Similarly to the CFP value, the recycling rate of the target substance in the final product can be calculated by sequential calculation from the most upstream company (terminal end company). The due diligence score (DD score) can be integrated by calculation similar to those for the CFP value and the recycling rate. In one example, the DD score (integrated result) in the final product can be obtained by replacing the CFP value with the DD score and performing sequential calculation from the most upstream company (terminal end company).

In the above embodiments, the traceability-related information of each company (Tier N-1) other than the most upstream company need not be stored in the shared storage area between the company and its downstream company, and the integration result of each company (Tier N-1 CFP value and recycling rate of target substance in Tier N-1 product) may be stored in the shared storage area between the company and its downstream company (Tier N-2). Thus, it is possible to obtain the traceability-related information (integration result) of the final product without disclosing the traceability-related information of each company.

In the above embodiments, it is assumed that each company places an order for a certain material with one company. In the above embodiments, however, the order format of each company is not limited to such an example. At least a part of the companies belonging to the supply chain may place an order for the same product with a plurality of upstream companies and use the obtained upstream products selectively for the in-house product. In the example of FIG. 13, a product A11_1, a product A11_2, or a product A11_3 in Tier 2 may be used selectively for the product A1 in Tier 1. In this case, the server device 1 may hold the linking relationship for each pattern for use. In the above example, the server device 1 may hold pieces of linking information for the product A1 in Tier 1, such as a pattern 1 "product A11_1 in Tier 2, ...," a pattern 2 "product A11_2, ...," and a pattern 3 "product A11_3, ...." In response to this, the server device 1 may execute the calculation (integration) of the traceability-related information for each pattern. In one example, the server device 1 may output the calculation result for each pattern. In another example, the server device 1 may calculate, based on the calculation result, statistics such as a maximum value, a minimum value, an average value, a variance, a standard deviation, and a median of the calculation result, and output the calculated statistics.

In the above embodiments, the traceability-related information (in particular, CFP value) may be composed of primary data or may be composed of secondary data (inventory data). The primary data is a measured value, and the secondary data is a reference value to be used when the measured value is not obtained. In this case, the calculation (integration) of the traceability-related information may include calculating the primary data ratio of the traceability-related information obtained for the final product. The primary data ratio may be calculated by simple ratio calculation, or by weighted calculation involving replacing the CFP value with the primary data ratio of each company in the above CFP value calculation formula and performing sequential calculation from the most upstream company.

The process described as being executed by a single device may be executed by a plurality of devices in cooperation. Alternatively, the process described as being executed by different devices may be executed by a single device. In a computer system, the hardware configuration (server configuration) that implements functions can be changed flexibly.

The present disclosure may be embodied such that a computer program that implements the functions described in the above embodiments is supplied to a computer and is read and executed by one or more processors of the computer. The computer program may be provided to the computer by being stored in a non-transitory computer-readable storage medium connectable to a system bus of the computer, or may be provided to the computer via a network. Examples of the non-transitory computer-readable storage medium include any types of disk or disc such as magnetic disks (e.g., a floppy (registered trademark) disk and a hard disk drive (HDD)) and optical discs (e.g., a compact disc ROM (CD-ROM), a digital versatile disc (DVD), and a Blu-ray disc), a read only memory (ROM), a random access memory (RAM), an EPROM, an electrically erasable programmable ROM (EEPROM), a magnetic card, a flash memory, an optical card, and any types of medium suitable to store electronic instructions.

**Claims**

1. A server device (1) comprising:

   a storage device (12) configured to store, for individual companies in a supply chain, pieces of product information on products of the companies; and
   a control unit (11),
   wherein the control unit (11) is configured to

   assuming that each of the companies in the supply chain is a target company, receive, from an account of the target company, either of (i) a first request to link, to first product information on a target product of the target company, second product information on an upstream product of an upstream company for the target company in the supply chain and (ii) a second request to assign termination information indicating a terminal end to the first product information,
   create a product tree showing relationships among the products of the companies by reflecting each of the received requests,
   execute information processing related to the created product tree, and
   output a result of executing the information processing.

2. The server device (1) according to claim 1, wherein:

   the linking includes associating the target product as a parent node and the upstream product as a child node on the product tree;
   the information processing related to the product tree includes determining whether the termination information is assigned to pieces of product information on all products associated with leaf nodes of the product tree; and
   the outputting the result of executing the information processing includes outputting a result of determining whether the termination information is assigned.

3. The server device (1) according to claim 2, wherein:

   the first request includes designation as to whether the linking has been completed for the first product information;
   the control unit (11) is further configured to assign status information indicating whether the linking has been completed to the first product information in response to the designation included in the first request;
   the information processing related to the product tree further includes referring to pieces of the status information assigned to pieces of product information on all products associated with nodes other than the leaf nodes of the product tree, and determining whether the linking has been completed for the pieces of product information on all the products; and
   the outputting the result of executing the information processing includes outputting a result of determining whether the linking has been completed.

4. The server device (1) according to claim 1, wherein:

   the linking includes associating the target product as a parent node and the upstream product as a child node on the product tree;
   the information processing related to the product tree includes

   identifying products associated with leaf nodes of the product tree, and
   determining whether either of the first request and the second request has been received for product information on each of the identified products to check whether a provisional terminal end product is present, the provisional terminal end product being a product that is provisionally at the terminal end due to reception of neither of the first request and the second request; and

the outputting the result of executing the information processing includes outputting, when a result of the check shows that the provisional terminal end product is present, an alert to an account of a provisional terminal end company having authority to make each of the requests for product information on the provisional terminal end product.

5. The server device (1) according to claim 1, wherein:

the linking includes associating the target product as a parent node and the upstream product as a child node on the product tree;
the product information includes setting information indicating a company permitted to view the product information;
the information processing related to the product tree includes

identifying products associated with leaf nodes of a target product tree to which a target final product belongs as a root node in response to a request from an account of a most downstream company, and
determining whether either of the first request and the second request has been received for pieces of product information on all the identified products to check whether a provisional terminal end product is present, the provisional terminal end product being a product that is provisionally at the terminal end due to reception of neither of the first request and the second request; and

the outputting the result of executing the information processing includes executing, when a result of the check shows that the provisional terminal end product is present, at least one of (A) giving a notification about a reminder to an account of a provisional terminal end company having authority to make each of the requests for product information on the provisional terminal end product and (B) identifying, when the most downstream company is not permitted to view the product information on the provisional terminal end product, product information that the most downstream company is permitted to view by tracing the target product tree toward the root node from a leaf node associated with the provisional terminal end product that the most downstream company is not permitted to view, and giving a notification about a request for the reminder to an account of a viewing-permitted company having the identified product information.

6. The server device (1) according to claim 1, wherein:

the linking includes associating the target product as a parent node and the upstream product as a child node on the product tree; and
the receiving each of the requests includes prohibiting reception of the second request when a node associated with the target product is not a leaf node on the product tree to which the target product belongs.

7. The server device (1) according to any of claims 1 to 6, wherein:

the information processing related to the product tree includes generating a tree diagram showing the product tree; and
the outputting the result of executing the information processing includes outputting the generated tree diagram.

8. An information processing method to be executed by a server device (1) including a storage device (12) configured to store, for individual companies in a supply chain, pieces of product information on products of the companies, the information processing method comprising:

assuming that each of the companies in the supply chain is a target company, receiving, from an account of the target company, either of (i) a first request to link, to first product information on a target product of the target company, second product information on an upstream product of an upstream company for the target company in the supply chain and (ii) a second request to assign termination information indicating a terminal end to the first product information;
creating a product tree showing relationships among the products of the companies by reflecting each of the received requests;
executing information processing related to the created product tree; and

outputting a result of executing the information processing.

9. The information processing method according to claim 8, wherein:

the linking includes associating the target product as a parent node and the upstream product as a child node on the product tree;
the information processing related to the product tree includes determining whether the termination information is assigned to pieces of product information on all products associated with leaf nodes of the product tree; and
the outputting the result of executing the information processing includes outputting a result of determining whether the termination information is assigned.

10. The information processing method according to claim 9,

wherein the first request includes designation as to whether the linking has been completed for the first product information,
the information processing method further comprising assigning status information indicating whether the linking has been completed to the first product information in response to the designation included in the first request,
wherein the information processing related to the product tree further includes referring to pieces of the status information assigned to pieces of product information on all products associated with nodes other than the leaf nodes of the product tree, and determining whether the linking has been completed for the pieces of product information on all the products, and
wherein the outputting the result of executing the information processing includes outputting a result of determining whether the linking has been completed.

11. The information processing method according to claim 8, wherein:

the linking includes associating the target product as a parent node and the upstream product as a child node on the product tree;
the information processing related to the product tree includes

identifying products associated with leaf nodes of the product tree, and
determining whether either of the first request and the second request has been received for product information on each of the identified products to check whether a provisional terminal end product is present, the provisional terminal end product being a product that is provisionally at the terminal end due to reception of neither of the first request and the second request; and

the outputting the result of executing the information processing includes outputting, when a result of the check shows that the provisional terminal end product is present, an alert to an account of a provisional terminal end company having authority to make each of the requests for product information on the provisional terminal end product.

12. The information processing method according to claim 8, wherein:

the linking includes associating the target product as a parent node and the upstream product as a child node on the product tree;
the product information includes setting information indicating a company permitted to view the product information;
the information processing related to the product tree includes

identifying products associated with leaf nodes of a target product tree to which a target final product belongs as a root node in response to a request from an account of a most downstream company, and
determining whether either of the first request and the second request has been received for pieces of product information on all the identified products to check whether a provisional terminal end product is present, the provisional terminal end product being a product that is provisionally at the terminal end due to reception of neither of the first request and the second request; and

the outputting the result of executing the information processing includes executing, when a result of the check shows that the provisional terminal end product is present, at least one of (A) giving a notification about a reminder to an account of a provisional terminal end company having authority to make each of the requests for product information on the provisional terminal end product and (B) identifying, when the most downstream company is not permitted to view the product information on the provisional terminal end product, product information that the most downstream company is permitted to view by tracing the target product tree toward the root node from a leaf node associated with the provisional terminal end product that the most downstream company is not permitted to view, and giving a notification about a request for the reminder to an account of a viewing-permitted company having the identified product information.

13. The information processing method according to claim 8, wherein:

the linking includes associating the target product as a parent node and the upstream product as a child node on the product tree; and
the receiving each of the requests includes prohibiting reception of the second request when a node associated with the target product is not a leaf node on the product tree to which the target product belongs.

14. The information processing method according to any of claims 8 to 13, wherein:

the information processing related to the product tree includes generating a tree diagram showing the product tree; and
the outputting the result of executing the information processing includes outputting the generated tree diagram.

15. A storage medium storing instructions that cause an information processing device to perform functions, the information processing device being configured to communicate with a server device (1) configured to store pieces of product information on products of individual companies in a supply chain, the functions comprising,
after accessing the server device (1) with an account of the target company, transmitting to the server device (1) either of (i) a first request to link, to first product information on a target product of a target company, second product information on an upstream product of an upstream company for the target company in the supply chain and (ii) a second request to assign termination information indicating a terminal end to the first product information.

**Patentansprüche**

1. Servervorrichtung (1), umfassend:

eine Speichervorrichtung (12), die konfiguriert ist, um für einzelne Unternehmen in einer Lieferkette Teile von Produktinformationen über Produkte der Unternehmen zu speichern; und
eine Steuereinheit (11),
wobei die Steuereinheit (11) zu Folgendem konfiguriert ist
unter der Annahme, dass jedes der Unternehmen in der Lieferkette ein Zielunternehmen ist, Empfangen, von einem Konto des Zielunternehmens, eines von (i) einer erste Anforderung zum Verknüpfen, mit ersten Produktinformationen über ein Zielprodukt des Zielunternehmens, von zweiten Produktinformationen über ein stromaufwärtiges Produkt eines stromaufwärtigen Unternehmens für das Zielunternehmen in der Lieferkette oder (ii) einer zweiten Anforderung zum Zuweisen von Abschlussinformationen, die ein abschließendes Ende angeben, zu den ersten Produktinformationen,
Erstellen eines Produktbaums, der Beziehungen zwischen den Produkten der Unternehmen zeigt, indem er jede der erhaltenen Anforderungen widerspiegelt,
Ausführen von Informationsverarbeitung in Bezug auf den erstellten Produktbaum, und
Ausgeben eines Resultats eines Ausführens der Informationsverarbeitung.

2. Servervorrichtung (1) nach Anspruch 1, wobei:

das Verknüpfen ein Assoziieren des Zielprodukts als übergeordneten Knoten und des stromaufwärtigen Produkts als untergeordneten Knoten in dem Produktbaum umfasst;
das Informationsverarbeiten in Bezug auf den Produktbaum ein Bestimmen beinhaltet, ob die Abschlussinformationen Teilen von Produktinformationen über alle Produkte zugewiesen werden, die mit Blattknoten des Produktbaums assoziiert sind; und
das Ausgeben des Resultats eines Ausführens der Informationsverarbeitung ein Ausgeben eines Resultats eines Bestimmens umfasst, ob die Abschlussinformationen zugewiesen sind.

3.  Servervorrichtung (1) nach Anspruch 2, wobei:

    die erste Anforderung eine Angabe darüber beinhaltet, ob das Verknüpfen für die ersten Produktinformationen vervollständigt ist;
    die Steuereinheit (11) ferner konfiguriert ist, um als Reaktion auf die Angabe, die in der ersten Anforderung beinhaltet ist, den ersten Produktinformationen in der ersten Anforderung enthaltene Bezeichnung eine Statusinformationen zuzuweisen, die angeben, ob das Verknüpfen vervollständigt wurde;
    das Informationsverarbeiten in Bezug auf den Produktbaum ferner eine Bezugnahme auf Teile der Statusinformationen, die Teilen der Produktinformation auf allen Produkten zugewiesen sind, die mit anderen Knoten als den Blattknoten des Produktbaums assoziiert sind, und ein Bestimmen, ob das Verknüpfen für die Teile von Produktinformationen über alle Produkte vervollständigt wurde; und
    das Ausgeben des Resultats eines Ausführens der Informationsverarbeitung ein Ausgeben eines Resultats eines Bestimmens umfasst, ob das Verknüpfen vervollständigt wurde.

4.  Servervorrichtung (1) nach Anspruch 1, wobei:

    das Verknüpfen ein Assoziieren des Zielprodukts als übergeordneten Knoten und des stromaufwärtigen Produkts als untergeordneten Knoten in dem Produktbaum umfasst;
    das Informationsverarbeiten in Bezug auf den Produktbaum Folgendes beinhaltet
    Identifizieren von Produkten, die mit Blattknoten des Produktbaums assoziiert sind, und
    Bestimmen, ob eine von der ersten Anforderung und der zweiten Anforderung für Produktinformationen über jedes der identifizierten Produkte erhalten wurde, um zu prüfen, ob ein vorläufiges abschließendes Endprodukt vorhanden ist, wobei das vorläufige abschließende Endprodukt ein Produkt ist, das aufgrund des Empfangs von keiner der ersten Anforderung und der zweiten Anforderung vorläufig an dem abschließenden Ende ist; und
    das Ausgeben des Resultats eines Ausführens des Informationsverarbeitens ein Ausgeben einer Warnung an ein Konto eines vorläufigen abschließenden Endunternehmens, das befugt ist, jede der Anforderungen nach Produktinformationen über das vorläufige abschließende Endprodukt zu stellen, wenn ein Resultat der Prüfung zeigt, dass das vorläufige abschließende Endprodukt vorhanden ist.

5.  Servervorrichtung (1) nach Anspruch 1, wobei:

    das Verknüpfen ein Assoziieren des Zielprodukts als übergeordneten Knoten und des stromaufwärtigen Produkts als untergeordneten Knoten in dem Produktbaum umfasst;
    die Produktinformationen Einstellungsinformationen beinhalten, die ein Unternehmen angeben, das berechtigt ist, die Produktinformationen einzusehen;
    das Informationsverarbeiten in Bezug auf den Produktbaum Folgendes beinhaltet
    Identifizieren von Produkten, die mit Blattknoten eines Zielproduktbaums assoziiert sind, zu dem ein endgültiges Zielprodukt als Wurzelknoten gehört, als Reaktion auf eine Anforderung von einem Konto eines am meisten stromabwärtigen Unternehmens, und
    Bestimmen, ob eine von der ersten Anforderung und der zweiten Anforderung für Teile von Produktinformationen über alle identifizierten Produkte erhalten wurde, um zu prüfen, ob ein vorläufiges abschließendes Endprodukt vorhanden ist, wobei das vorläufige abschließende Endprodukt ein Produkt ist, das aufgrund des Empfangs von keiner der ersten Anforderung und der zweiten Anforderung vorläufig an dem abschließenden Ende ist; und
    das Ausgeben des Resultats eines Ausführens des Informationsverarbeitens ein Ausführen, wenn ein Resultat der Prüfung zeigt, dass das vorläufige abschließende Endprodukt vorhanden ist, mindestens eines von (A) Abgeben einer Benachrichtigung über eine Erinnerung an ein Konto eines vorläufigen abschließenden Endunternehmens, das berechtigt ist, jede der Anforderungen nach Produktinformationen über das vorläufige abschließende Endprodukt zu stellen, und (B) Identifizieren, wenn das am weitesten stromabwärtige Unternehmen nicht berechtigt ist, die Produktinformationen über das vorläufige abschließende Endprodukt einzusehen, von Produktinformationen beinhaltet, die das am weitesten stromabwärtige Unternehmen einsehen darf, indem der Zielproduktbaum von einem Blattknoten, der mit dem vorläufigen abschließenden Endprodukt assoziiert ist, das das am weitesten stromabwärtige Unternehmen nicht einsehen darf, zu dem Wurzelknoten zurückverfolgt wird, und Abgeben einer Benachrichtigung über eine Anforderung der Erinnerung an ein Konto eines Unternehmens, das zur Einsicht berechtigt ist und über die identifizierten Produktinformationen verfügt.

6.  Servervorrichtung (1) nach Anspruch 1, wobei:

    das Verknüpfen ein Assoziieren des Zielprodukts als übergeordneten Knoten und des stromaufwärtigen Produkts als untergeordneten Knoten in dem Produktbaum beinhaltet; und

das Empfangen jeder der Anforderungen ein Verbieten des Empfangs der zweiten Anforderung beinhaltet, wenn ein mit dem Zielprodukt assoziierter Knoten kein Blattknoten in dem Produktbaum ist, zu dem das Zielprodukt gehört.

**7.** Servervorrichtung (1) nach einem der Ansprüche 1 bis 6, wobei:

das Informationsverarbeiten in Bezug auf den Produktbaum umfasst ein Erzeugen eines Baumdiagramms beinhaltet, das den Produktbaum zeigt; und

das Ausgeben des Resultats eines Ausführens der Informationsverarbeitung ein Ausgeben des erzeugten Baumdiagramms beinhaltet.

**8.** Informationsverarbeitungsverfahren, das von einer Servervorrichtung (1) auszuführen ist, die eine Speichervorrichtung (12) beinhaltet, die konfiguriert ist, um für einzelne Unternehmen in einer Lieferkette Teile von Produktinformationen über Produkte der Unternehmen zu speichern, das Informationsverarbeitungsverfahren umfassend:

unter der Annahme, dass jedes der Unternehmen in der Lieferkette ein Zielunternehmen ist, Empfangen, von einem Konto des Zielunternehmens, eines von (i) einer erste Anforderung zum Verknüpfen, mit ersten Produktinformationen über ein Zielprodukt des Zielunternehmens, von zweiten Produktinformationen über ein stromaufwärtiges Produkt eines stromaufwärtigen Unternehmens für das Zielunternehmen in der Lieferkette oder (ii) einer zweiten Anforderung zum Zuweisen von Abschlussinformationen, die ein abschließendes Ende angeben, zu den ersten Produktinformationen;

Erstellen eines Produktbaums, der Beziehungen zwischen den Produkten der Unternehmen zeigt, indem er jede der erhaltenen Anforderungen widerspiegelt;

Ausführen von Informationsverarbeitung in Bezug auf den erstellten Produktbaum; und

Ausgeben eines Resultats eines Ausführens der Informationsverarbeitung.

**9.** Informationsverarbeitungsverfahren nach Anspruch 8, wobei:

das Verknüpfen ein Assoziieren des Zielprodukts als übergeordneten Knoten und des stromaufwärtigen Produkts als untergeordneten Knoten in dem Produktbaum umfasst;

das Informationsverarbeiten in Bezug auf den Produktbaum ein Bestimmen beinhaltet, ob die Abschlussinformationen Teilen von Produktinformationen über alle Produkte zugewiesen werden, die mit Blattknoten des Produktbaums assoziiert sind; und

das Ausgeben des Resultats eines Ausführens der Informationsverarbeitung ein Ausgeben eines Resultats eines Bestimmens umfasst, ob die Abschlussinformationen zugewiesen sind.

**10.** Informationsverarbeitungsverfahren nach Anspruch 9,

wobei die erste Anforderung eine Angabe darüber beinhaltet, ob das Verknüpfen für die ersten Produktinformationen vervollständigt ist,

das Informationsverarbeitungsverfahren ferner umfassend ein Zuweisen von Statusinformationen, die angeben, ob das Verknüpfen mit den ersten Produktinformationen als Reaktion auf die Angabe, die in der ersten Anforderung enthalten ist, vervollständigt wurde,

wobei das Informationsverarbeiten in Bezug auf den Produktbaum ferner eine Bezugnahme auf Teile der Statusinformationen, die Teilen der Produktinformation auf allen Produkten zugewiesen sind, die mit anderen Knoten als den Blattknoten des Produktbaums assoziiert sind, und ein Bestimmen, ob das Verknüpfen für die Teile von Produktinformationen über alle Produkte vervollständigt wurde, und

wobei das Ausgeben des Resultats eines Ausführens der Informationsverarbeitung ein Ausgeben eines Resultats eines Bestimmens umfasst, ob das Verknüpfen vervollständigt wurde.

**11.** Informationsverarbeitungsverfahren nach Anspruch 8, wobei:

das Verknüpfen ein Assoziieren des Zielprodukts als übergeordneten Knoten und des stromaufwärtigen Produkts als untergeordneten Knoten in dem Produktbaum umfasst;

das Informationsverarbeiten in Bezug auf den Produktbaum Folgendes beinhaltet

Identifizieren von Produkten, die mit Blattknoten des Produktbaums assoziiert sind, und

Bestimmen, ob eine von der ersten Anforderung und der zweiten Anforderung für Produktinformationen über jedes der identifizierten Produkte erhalten wurde, um zu prüfen, ob ein vorläufiges abschließendes Endprodukt vorhanden ist, wobei das vorläufige abschließende Endprodukt ein Produkt ist, das aufgrund des Empfangs von keiner der ersten Anforderung und der zweiten Anforderung vorläufig an dem abschließenden Ende ist; und das Ausgeben des Resultats eines Ausführens des Informationsverarbeitens ein Ausgeben einer Warnung an ein Konto eines vorläufigen abschließenden Endunternehmens, das befugt ist, jede der Anforderungen nach Produktinformationen über das vorläufige abschließende Endprodukt zu stellen, wenn ein Resultat der Prüfung zeigt, dass das vorläufige abschließende Endprodukt vorhanden ist.

**12.** Informationsverarbeitungsverfahren nach Anspruch 8, wobei:

das Verknüpfen ein Assoziieren des Zielprodukts als übergeordneten Knoten und des stromaufwärtigen Produkts als untergeordneten Knoten in dem Produktbaum umfasst;
die Produktinformationen Einstellungsinformationen beinhalten, die ein Unternehmen angeben, das berechtigt ist, die Produktinformationen einzusehen;
das Informationsverarbeiten in Bezug auf den Produktbaum Folgendes beinhaltet
Identifizieren von Produkten, die mit Blattknoten eines Zielproduktbaums assoziiert sind, zu dem ein endgültiges Zielprodukt als Wurzelknoten gehört, als Reaktion auf eine Anforderung von einem Konto eines am meisten stromabwärtigen Unternehmens, und
Bestimmen, ob eine von der ersten Anforderung und der zweiten Anforderung für Teile von Produktinformationen über alle identifizierten Produkte erhalten wurde, um zu prüfen, ob ein vorläufiges abschließendes Endprodukt vorhanden ist, wobei das vorläufige abschließende Endprodukt ein Produkt ist, das aufgrund des Empfangs von keiner der ersten Anforderung und der zweiten Anforderung vorläufig an dem abschließenden Ende ist; und
das Ausgeben des Resultats eines Ausführens des Informationsverarbeitens ein Ausführen, wenn ein Resultat der Prüfung zeigt, dass das vorläufige abschließende Endprodukt vorhanden ist, mindestens eines von (A) Abgeben einer Benachrichtigung über eine Erinnerung an ein Konto eines vorläufigen abschließenden Endunternehmens, das berechtigt ist, jede der Anforderungen nach Produktinformationen über das vorläufige abschließende Endprodukt zu stellen, und (B) Identifizieren, wenn das am weitesten stromabwärtige Unternehmen nicht berechtigt ist, die Produktinformationen über das vorläufige abschließende Endprodukt einzusehen, von Produktinformationen beinhaltet, die das am weitesten stromabwärtige Unternehmen einsehen darf, indem der Zielproduktbaum von einem Blattknoten, der mit dem vorläufigen abschließenden Endprodukt assoziiert ist, das das am weitesten stromabwärtige Unternehmen nicht einsehen darf, zu dem Wurzelknoten zurückverfolgt wird, und Abgeben einer Benachrichtigung über eine Anforderung der Erinnerung an ein Konto eines Unternehmens, das zur Einsicht berechtigt ist und über die identifizierten Produktinformationen verfügt.

**13.** Informationsverarbeitungsverfahren nach Anspruch 8, wobei:

das Verknüpfen ein Assoziieren des Zielprodukts als übergeordneten Knoten und des stromaufwärtigen Produkts als untergeordneten Knoten in dem Produktbaum beinhaltet; und
das Empfangen jeder der Anforderungen ein Verbieten des Empfangs der zweiten Anforderung beinhaltet, wenn ein mit dem Zielprodukt assoziierter Knoten kein Blattknoten in dem Produktbaum ist, zu dem das Zielprodukt gehört.

**14.** Informationsverarbeitungsverfahren nach einem der Ansprüche 8 bis 13, wobei:

das Informationsverarbeiten in Bezug auf den Produktbaum umfasst ein Erzeugen eines Baumdiagramms beinhaltet, das den Produktbaum zeigt; und
das Ausgeben des Resultats eines Ausführens der Informationsverarbeitung ein Ausgeben des erzeugten Baumdiagramms beinhaltet.

**15.** Speichermedium, das Anweisungen speichert, die eine Informationsverarbeitungsvorrichtung veranlassen, Funktionen auszuführen, wobei die Informationsverarbeitensvorrichtung konfiguriert ist, um mit einer Servervorrichtung (1) zu kommunizieren, die konfiguriert ist, um Teile von Produktinformationen über Produkte einzelner Unternehmen in einer Lieferkette zu speichern, die Funktionen umfassend
nach dem Zugriff auf die Servervorrichtung (1) mit einem Konto des Zielunternehmens, Übertragen an die Servervorrichtung (1) eines von (i) einer erste Anforderung zum Verknüpfen, mit ersten Produktinformationen über ein Zielprodukt des Zielunternehmens, von zweiten Produktinformationen über ein stromaufwärtiges Produkt eines stromaufwärtigen Unternehmens für das Zielunternehmen in der Lieferkette oder (ii) einer zweiten Anforderung zum Zuweisen von Abschlussinformationen, die ein abschließendes Ende angeben, zu den ersten Produktinformationen.

**Revendications**

1. Dispositif serveur (1) comprenant :

   un dispositif de stockage (12) configuré pour stocker, pour des sociétés individuelles dans une chaîne d'approvisionnement, des éléments d'information de produit sur des produits des sociétés ; et
   une unité de commande (11),
   l'unité de commande (11) étant configurée pour
   en supposant que chacune des sociétés dans la chaîne d'approvisionnement est une société cible, recevoir, depuis un compte de la société cible, chacune de (i) une première demande pour lier, à une première information de produit sur un produit de cible de la société cible, une deuxième information de produit sur un produit en amont d'une société en amont pour la société cible dans la chaîne d'approvisionnement et (ii) une deuxième demande pour assigner de l'information de fin indiquant une extrémité terminale à la première information de produit,
   créer un arbre de produit montrant des relations parmi les produits des sociétés en reflétant chacune des demandes reçues,
   exécuter un traitement de l'information lié à l'arbre de produit créé, et
   délivrer un résultat d'exécution du traitement de l'information.

2. Dispositif serveur (1) selon la revendication 1, dans lequel :

   la liaison comprend le fait d'associer le produit de cible comme nœud parent et le produit en amont comme nœud enfant sur l'arbre de produit ;
   le traitement de l'information lié à l'arbre de produit comprend le fait de déterminer si l'information de fin est assignée à des éléments d'information de produit sur tous les produits associés à des nœuds de feuille de l'arbre de produit ; et
   la sortie du résultat d'exécution du traitement de l'information comprend la sortie d'un résultat de détermination du fait que l'information de fin est assignée.

3. Dispositif serveur (1) selon la revendication 2, dans lequel :

   la première demande comprend une désignation pour savoir si la liaison a été réalisée pour la première information de produit ;
   l'unité de commande (11) est en outre configurée pour assigner de l'information d'état indiquant si la liaison a été réalisée à la première information de produit en réponse à la désignation incluse dans la première demande ;
   le traitement de l'information lié à l'arbre de produit comprend en outre le fait de se référer à des éléments de l'information d'état assignés à des éléments d'information de produit sur tous les produits associés à des nœuds autres que les nœuds de feuille de l'arbre de produit, et de déterminer si la liaison a été réalisée pour les éléments d'information de produit sur tous les produits ; et
   la sortie du résultat d'exécution du traitement de l'information comprend la sortie d'un résultat de détermination du fait que la liaison a été réalisée.

4. Dispositif serveur (1) selon la revendication 1, dans lequel :

   la liaison comprend le fait d'associer le produit de cible comme nœud parent et le produit en amont comme nœud enfant sur l'arbre de produit ;
   le traitement de l'information lié à l'arbre de produit comprend
   l'identification de produits liés aux nœuds de feuille de l'arbre de produit, et
   la détermination du fait que chacune de la première demande et de la deuxième demande a été reçue pour de l'information de produit sur chacun des produits identifiés pour vérifier si un produit d'extrémité terminale provisoire est présent, le produit d'extrémité terminale provisoire étant un produit qui est de manière provisoire à l'extrémité terminale du fait de la réception d'aucune de la première demande et de la deuxième demande ; et
   la sortie du résultat d'exécution du traitement de l'information comprend la sortie, quand un résultat du contrôle montre que le produit d'extrémité terminale provisoire est présent, d'une alerte vers un compte d'une société d'extrémité terminale provisoire ayant autorité pour faire chacune des demandes d'information de produit sur le produit d'extrémité terminale provisoire.

5. Dispositif serveur (1) selon la revendication 1, dans lequel :

la liaison comprend le fait d'associer le produit de cible comme nœud parent et le produit en amont comme nœud enfant sur l'arbre de produit ;

l'information de produit comprend de l'information de réglage indiquant une société autorisée à voir l'information de produit ;

le traitement de l'information lié à l'arbre de produit comprend

l'identification de produits associés à des nœuds de feuille d'un arbre de produit de cible auquel un produit final de cible appartient comme nœud de racine en réponse à une demande provenant d'un compte d'une société la plus en aval, et

la détermination du fait que chacune de la première demande et de la deuxième demande a été reçue pour des éléments d'information de produit sur tous les produits identifiés pour vérifier si un produit d'extrémité terminale provisoire est présent, le produit d'extrémité terminale provisoire étant un produit qui est de manière provisoire à l'extrémité terminale du fait de la réception d'aucune de la première demande et de la deuxième demande ; et

la sortie du résultat d'exécution du traitement de l'information comprend l'exécution, quand un résultat du contrôle montre que le produit d'extrémité terminale provisoire est présent, de au moins un de (A) fourniture d'une notification au sujet d'un rappel à un compte d'une société terminale provisoire ayant autorité pour faire chacune des demandes d'information de produit sur le produit d'extrémité terminale provisoire et (B) identification, quand la société la plus en aval n'est pas autorisée à voir l'information de produit sur le produit d'extrémité terminale provisoire, de l'information de produit que la société la plus en aval est autorisée à voir en remontant l'arbre de produit de cible vers le nœud de racine depuis un nœud de feuille associé au produit d'extrémité terminale provisoire que la société la plus en aval n'est pas autorisée à voir, et fourniture d'une notification au sujet d'une demande pour le rappel à un compte d'une société autorisée à voir ayant l'information de produit identifiée.

6. Dispositif serveur (1) selon la revendication 1, dans lequel :

la liaison comprend le fait d'associer le produit de cible comme nœud parent et le produit en amont comme nœud enfant sur l'arbre de produit ; et

la réception de chacune des demandes comprend le fait d'interdire une réception de la deuxième demande quand un nœud associé au produit de cible n'est pas un nœud de feuille sur l'arbre de produit auquel le produit de cible appartient.

7. Dispositif serveur (1) selon l'une quelconque des revendications 1 à 6, dans lequel :

le traitement de l'information lié à l'arbre de produit comprend la génération d'un diagramme d'arbre montrant l'arbre de produit ; et

la sortie du résultat d'exécution du traitement de l'information comprend la sortie du diagramme d'arbre généré.

8. Procédé de traitement de l'information devant être exécuté par un dispositif serveur (1) comprenant un dispositif de stockage (12) configuré pour stocker, pour des sociétés individuelles dans une chaîne d'approvisionnement, des éléments d'information de produit sur des produits des sociétés, le procédé de traitement de l'information comprenant :

en supposant que chacune des sociétés dans la chaîne d'approvisionnement est une société cible, la réception, depuis un compte de la société cible, de chacune de (i) une première demande pour lier, à une première information de produit sur un produit de cible de la société cible, une deuxième information de produit sur un produit en amont d'une société en amont pour la société cible dans la chaîne d'approvisionnement et (ii) une deuxième demande pour assigner de l'information de fin indiquant une extrémité terminale à la première information de produit ;

la création d'un arbre de produit montrant des relations parmi les produits des sociétés en reflétant chacune des demandes reçues ;

l'exécution d'un traitement de l'information lié à l'arbre de produit créé ; et

la sortie d'un résultat d'exécution du traitement de l'information.

9. Procédé de traitement de l'information selon la revendication 8, selon lequel :

la liaison comprend le fait d'associer le produit de cible comme nœud parent et le produit en amont comme nœud enfant sur l'arbre de produit ;

le traitement de l'information lié à l'arbre de produit comprend la détermination du fait que l'information de fin est assignée à des éléments d'information de produit sur tous les produits associés à des nœuds de feuille de l'arbre de produit ; et

la sortie du résultat d'exécution du traitement de l'information comprend la sortie d'un résultat de détermination du fait que l'information de fin est assignée.

**10.** Procédé de traitement de l'information selon la revendication 9,

selon lequel la première demande comprend une désignation pour savoir si la liaison a été réalisée pour la première information de produit,

le procédé de traitement de l'information comprenant en outre le fait d'assigner de l'information d'état indiquant si la liaison a été réalisée à la première information de produit en réponse à la désignation incluse dans la première demande,

le traitement de l'information lié à l'arbre de produit comprenant en outre le fait de se référer à des éléments de l'information d'état assignée à des éléments d'information de produit sur tous les produits associés à des nœuds autres que les nœuds de feuille de l'arbre de produit, et de déterminer si la liaison a été réalisée pour les éléments d'information de produit sur tous les produits, et

la sortie du résultat d'exécution du traitement de l'information comprenant la sortie d'un résultat de détermination du fait que la liaison a été réalisée.

**11.** Procédé de traitement de l'information selon la revendication 8, selon lequel :

la liaison comprend le fait d'associer le produit de cible comme nœud parent et le produit en amont comme nœud enfant sur l'arbre de produit ;

le traitement de l'information lié à l'arbre de produit comprend

l'identification de produits associés à des nœuds de feuille de l'arbre de produit, et

la détermination du fait que chacune de la première demande et de la deuxième demande a été reçue pour de l'information de produit sur chacun des produits identifiés pour vérifier si un produit d'extrémité terminale provisoire est présent, le produit d'extrémité terminale provisoire étant un produit qui est de manière provisoire à l'extrémité terminale du fait de la réception d'aucune de la première demande et de la deuxième demande ; et

la sortie du résultat d'exécution du traitement de l'information comprend la sortie, quand un résultat du contrôle montre que le produit d'extrémité terminale provisoire est présent, d'une alerte vers un compte d'une société d'extrémité terminale provisoire ayant autorité pour faire chacune des demandes de l'information de produit sur le produit d'extrémité terminale provisoire.

**12.** Procédé de traitement de l'information selon la revendication 8, selon lequel :

la liaison comprend le fait d'associer le produit de cible comme nœud parent et le produit en amont comme nœud enfant sur l'arbre de produit ;

l'information de produit comprend de l'information de réglage indiquant une société autorisée à voir l'information de produit ;

le traitement de l'information lié à l'arbre de produit comprend

l'identification de produits associés à des nœuds de feuille d'un arbre de produit de cible auquel un produit final de cible appartient comme nœud racine en réponse à une demande à partir d'un compte d'une société la plus en aval, et

la détermination du fait que chacune de la première demande et de la deuxième demande a été reçue pour des éléments d'information de produit sur tous les produits identifiés pour vérifier si un produit d'extrémité terminale provisoire est présent, le produit d'extrémité terminale provisoire étant un produit qui est de manière provisoire à l'extrémité terminale du fait de la réception d'aucune de la première demande et de la deuxième demande ; et

la sortie du résultat d'exécution du traitement de l'information comprend l'exécution, quand un résultat du contrôle montre que le produit d'extrémité terminale provisoire est présent, de au moins un de (A) fourniture d'une notification au sujet d'un rappel à un compte d'une société terminale provisoire ayant autorité pour faire chacune des demandes de l'information de produit sur le produit d'extrémité terminale provisoire et (B) l'identification, quand la société la plus en aval n'est pas autorisée à voir l'information de produit sur le produit d'extrémité terminale provisoire, de l'information de produit que la société la plus en aval est autorisée à voir en remontant l'arbre de produit de cible vers le nœud racine depuis un nœud de feuille associé au produit d'extrémité terminale provisoire que la société la plus en aval n'est pas autorisée à voir, et la fourniture d'une notification au sujet d'une demande du rappel à un compte d'une société autorisée à voir ayant l'information de produit identifiée.

**13.** Procédé de traitement de l'information selon la revendication 8, selon lequel :

la liaison comprend le fait d'associer le produit de cible comme nœud parent et le produit en amont comme nœud enfant sur l'arbre de produit ; et

la réception de chacune des demandes comprend le fait d'interdire la réception de la deuxième demande quand un nœud associé au produit de cible n'est pas un nœud de feuille sur l'arbre de produit auquel le produit de cible appartient.

14. Procédé de traitement de l'information selon l'une quelconque des revendications 8 à 13, selon lequel :

le traitement de l'information lié à l'arbre de produit comprend la génération d'un diagramme d'arbre montrant l'arbre de produit ; et

la sortie du résultat d'exécution du traitement de l'information comprend la sortie du diagramme d'arbre généré.

15. Support de stockage stockant des instructions qui amènent un dispositif de traitement de l'information à remplir des fonctions, le dispositif de traitement de l'information étant configuré pour communiquer avec un dispositif serveur (1) configuré pour stocker des éléments d'information de produit sur des produits de sociétés individuelles dans une chaîne d'approvisionnement, les fonctions comprenant,

après accès du dispositif de serveur (1) à un compte de la société cible, la transmission au dispositif serveur (1) de chacune (i) d'une première demande pour lier, à la première information de produit sur un produit de cible d'une société cible, une deuxième information de produit sur un produit en amont d'une société en amont pour la société cible dans la chaîne d'approvisionnement et (ii) d'une deuxième demande pour assigner de l'information de fin indiquant une extrémité terminale à la première information de produit.

# FIG. 1

SERVER DEVICE 1

COMPANY TERMINAL 2  COMPANY TERMINAL 2  COMPANY TERMINAL 2  COMPANY TERMINAL 2

DELIVERY  DELIVERY  DELIVERY

OEM COMPANY
(Tier0)

COMPANY A
(Tier1)

COMPANY B
(Tier2)

COMPANY C
(Tier3)

DOWNSTREAM ⟸⟸⟸⟸⟸⟸⟸⟸⟸⟸ UPSTREAM

EP 4 655 736 B1

# FIG. 2

| Tier0 | Tier1 | Tier2 | Tier3 |
|-------|-------|-------|-------|

Tier0: FINAL PRODUCT X

Tier1: PRODUCT A1, PRODUCT B1, PRODUCT C1, PRODUCT D1, ...

Tier2: PRODUCT A11, PRODUCT A12, PRODUCT A13, ...

Tier3: PRODUCT A111, PRODUCT A121, PRODUCT A122, PRODUCT A123

EP 4 655 736 B1

# FIG. 3

SERVER DEVICE

PRODUCT INFORMATION A

PRODUCT INFORMATION B

PRODUCT INFORMATION C

GENERATE PRODUCT TREE BY LINKING PIECES OF PRODUCT INFORMATION BASED ON LINKING INFORMATION

TRANSMIT INFORMATION ON PRODUCT MANUFACTURED IN-HOUSE (PRODUCT INFORMATION)

TRANSMIT LINKING REQUEST AND SELECT PRODUCT TO BE LINKED TO IN-HOUSE PRODUCT FROM AMONG PRODUCTS TO WHICH ACCESS IS PERMITTED BY UPSTREAM COMPANY

TRANSMIT INFORMATION INDICATING THAT DOWNSTREAM COMPANY IS PERMITTED TO ACCESS IN-HOUSE PRODUCT INFORMATION (PERMISSION INFORMATION)

COMPANY TERMINAL

PRODUCT INFORMATION A

COMPANY TERMINAL

PRODUCT INFORMATION B

PERMISSION INFORMATION

COMPANY A THAT PRODUCES DOWNSTREAM PRODUCT A
(Tier N)

COMPANY B THAT PRODUCES UPSTREAM PRODUCT B
(Tier N+1)

DOWNSTREAM ⟵                                                    UPSTREAM

EP 4 655 736 B1

# FIG. 4

SERVER DEVICE — 1

CONTROL UNIT — 11
- CPU
- RAM
- ROM

STORAGE UNIT — 12
- PROGRAM
- PRODUCT INFORMATION
- ACCOUNT INFORMATION

COMMUNICATION MODULE — 13

INPUT/OUTPUT DEVICE — 14

EP 4 655 736 B1

# FIG. 5

COMPANY TERMINAL

**21** CONTROL UNIT

- CPU
- RAM
- ROM

**22** STORAGE UNIT

- PROGRAM

**23** COMMUNICATION MODULE

**24** INPUT/OUTPUT DEVICE

2

EP 4 655 736 B1

# FIG. 6

# FIG. 7

2

COMPANY TERMINAL 21

CONTROL UNIT

PRODUCT
INFORMATION
GENERATING UNIT 211

AUTHORITY
SETTING UNIT 212

LINKING
REQUEST UNIT 213

INFORMATION
ACQUIRING UNIT 214

# FIG. 8

| | | | |
|---|---|---|---|
| COMPANY ID | | | C001 |
| COMPANY NAME | | | COMPANY A |
| PRODUCT ID | | | P001 |
| PRODUCT NAME | | | PRODUCT A |
| LINKING-RELATED INFORMATION | UPSTREAM PRODUCT INFORMATION | | (UNLINKED) |
| | TERMINATION FLAG | | (UNSET) |
| | LINKING COMPLETION FLAG | | (UNSET) |
| TRACEABILITY-RELATED INFORMATION | MATERIAL USE AMOUNT (LITHIUM) | | X[g] |
| | MATERIAL USE AMOUNT (NICKEL) | | X[g] |
| | MATERIAL USE AMOUNT (COBALT) | | X[g] |
| | MATERIAL USE AMOUNT (LEAD) | | X[g] |
| | $CO_2$ EMISSION AMOUNT DURING PRODUCTION | | X[g] |
| | DD INFORMATION | | ... |
| ... | | | ... |

0: CURRENTLY UNTERMINATED
1: TERMINATED

0: FURTHER LINKING MAY OCCUR
1: NO FURTHER LINKING OCCURS

# FIG. 9A

PRODUCT REGISTRATION/DISCLOSURE DESTINATION SETTING

PRODUCT NUMBER: P00001

PERMITTED COMPANY SETTING

- ☐ A CORPORATION
- ☐ B CORPORATION
- ☑ C CORPORATION
- ☐ D CORPORATION
- ☐ E CORPORATION
- ☐ F CORPORATION

PERMITTED ITEM

- ☑ COMPANY NAME
- ☑ IN-HOUSE PRODUCT NUMBER
- ☑ PARTNER'S PRODUCT NUMBER
- ☑ REQUIRED AMOUNT
- ☑ EMISSIONS INTENSITY
- ☑ ...

# FIG. 9B

PERMISSION INFORMATION GENERATED BY COMPANY TERMINAL

| | |
|---|---|
| COMPANY ID | C001 |
| PRODUCT ID | P001 |
| COMPANY ID PERMITTED TO ACCESS | ... |
| NAME OF ITEM TO WHICH ACCESS IS PERMITTED | ... |

EP 4 655 736 B1

# FIG. 10

PRODUCT REGISTRATION/LINKING DESTINATION SETTING

PRODUCT NUMBER [P00001]

UPSTREAM COMPANY

☐ A CORPORATION
☐ B CORPORATION
☑ C CORPORATION
☐ D CORPORATION
☐ E CORPORATION
☐ F CORPORATION

UPSTREAM PRODUCT

☑ P10001
☑ P10002
☑ P10003
☑ P10004
☑ P10005
☑ ...

☐ THIS PRODUCT IS TERMINAL END OF TREE (NO LINKING DESTINATION) — 1001

☐ NO FURTHER LINKING OCCURS — 1002

# FIG. 11

PRODUCT INFORMATION A OF COMPANY A

PRODUCT INFORMATION B OF COMPANY B

111 INFORMATION COLLECTING UNIT

STORAGE AREA B DEDICATED TO COMPANY B — PRODUCT INFORMATION B

STORAGE AREA AB SHARED BY COMPANIES A, B — PRODUCT INFORMATION B

STORAGE AREA A DEDICATED TO COMPANY A — PRODUCT INFORMATION A

112 AUTHORITY SETTING UNIT

PERMISSION INFORMATION FOR PERMITTING COMPANY A TO ACCESS PRODUCT INFORMATION B

INVEST ACCESS AUTHORITY IN COMPANY A BY COPYING PRODUCT INFORMATION TO SHARED AREA

ACQUIRE PRODUCT INFORMATION ACCESSIBLE TO COMPANY A AND PROVIDE IT TO COMPANY A

PERFORM LINKING BY UPDATING PRODUCT INFORMATION A

113 LINKING UNIT

GENERATE PRODUCT TREE BASED ON PRODUCT INFORMATION

114 INFORMATION PROVIDING UNIT

PRODUCT TREE

# FIG. 12

| COMPANY ID | | C001 |
|---|---|---|
| COMPANY NAME | | COMPANY A |
| PRODUCT ID | | P001 |
| PRODUCT NAME | | PRODUCT A |
| LINKING-RELATED INFORMATION | UPSTREAM PRODUCT INFORMATION | (POINTER) |
| | TERMINATION FLAG | 0 |
| | LINKING COMPLETION FLAG | 1 |
| TRACEABILITY-RELATED INFORMATION | MATERIAL USE AMOUNT (LITHIUM) | X[g] |
| | MATERIAL USE AMOUNT (NICKEL) | X[g] |
| | MATERIAL USE AMOUNT (COBALT) | X[g] |
| | MATERIAL USE AMOUNT (LEAD) | X[g] |
| | $CO_2$ EMISSION AMOUNT DURING PRODUCTION | X[g] |
| | DD INFORMATION | ... |
| ... | | ... |

| COMPANY ID | | C002 |
|---|---|---|
| COMPANY NAME | | COMPANY B |
| PRODUCT ID | | P002 |
| PRODUCT NAME | | PRODUCT B |
| LINKING-RELATED INFORMATION | UPSTREAM PRODUCT INFORMATION | (POINTER) |
| | TERMINATION FLAG | 0 |
| | LINKING COMPLETION FLAG | 1 |
| TRACEABILITY-RELATED INFORMATION | MATERIAL USE AMOUNT (LITHIUM) | X[g] |
| | MATERIAL USE AMOUNT (NICKEL) | X[g] |
| | MATERIAL USE AMOUNT (COBALT) | X[g] |
| | MATERIAL USE AMOUNT (LEAD) | X[g] |
| | $CO_2$ EMISSION AMOUNT DURING PRODUCTION | X[g] |
| | DD INFORMATION | ... |
| ... | | ... |

# FIG. 13

| FINAL PRODUCT X | PRODUCT A1 EMISSION AMOUNT $E_{A1}[g]$ | PRODUCT A11 EMISSION AMOUNT $E_{A11}[g]$ | PRODUCT A111 EMISSION AMOUNT $E_{A111}[g]$ |

PRODUCT A12
EMISSION AMOUNT $E_{A12}[g]$

PRODUCT A121
EMISSION AMOUNT $E_{A121}[g]$

PRODUCT B1
EMISSION AMOUNT $E_{B1}[g]$

PRODUCT A13
EMISSION AMOUNT $E_{A13}[g]$

PRODUCT A122
EMISSION AMOUNT $E_{A122}[g]$

PRODUCT C1
EMISSION AMOUNT $E_{C1}[g]$

PRODUCT A14
EMISSION AMOUNT $E_{A14}[g]$

PRODUCT A123
EMISSION AMOUNT $E_{A123}[g]$

PRODUCT D1
EMISSION AMOUNT $E_{D1}[g]$

PRODUCT E1
EMISSION AMOUNT $E_{E1}[g]$

EP 4 655 736 B1

# FIG. 14

FINAL PRODUCT X

PRODUCT A1 — PRODUCT A11 — PRODUCT A111

PRODUCT B1

**PRODUCT A12** — PRODUCT A121

PRODUCT C1

PRODUCT A13 — PRODUCT A122

PRODUCT D1

PRODUCT A14 — PRODUCT A123

PRODUCT E1

AAA CORPORATION
PRODUCT A12

| | |
|---|---|
| LITHIUM USE AMOUNT | ⋯ [g] |
| REUSED LITHIUM AMOUNT | ⋯ [g] |
| NICKEL USE AMOUNT | ⋯ [g] |
| REUSED NICKEL AMOUNT | ⋯ [g] |
| COBALT USE AMOUNT | ⋯ [g] |
| REUSED COBALT AMOUNT | ⋯ [g] |
| LEAD USE AMOUNT | ⋯ [g] |
| REUSED LEAD AMOUNT | ⋯ [g] |
| $CO_2$ EMISSION AMOUNT | ⋯ [g] |
| DD INFORMATION | ⋯ |

EP 4 655 736 B1

# FIG. 15

FINAL PRODUCT X

PRODUCT A1

NOT DISCLOSED

NOT DISCLOSED

NOT DISCLOSED

NOT DISCLOSED

NOT DISCLOSED

NOT DISCLOSED

PRODUCT A12

NOT DISCLOSED

NOT DISCLOSED

PRODUCT A121

PRODUCT A122

PRODUCT A123

AAA CORPORATION
PRODUCT A121

| | |
|---|---|
| LITHIUM USE AMOUNT | X [g] |
| REUSED LITHIUM AMOUNT | X [g] |
| NICKEL USE AMOUNT | X [g] |
| REUSED NICKEL AMOUNT | X [g] |
| COBALT USE AMOUNT | X [g] |
| REUSED COBALT AMOUNT | X [g] |
| LEAD USE AMOUNT | X [g] |
| REUSED LEAD AMOUNT | X [g] |
| [CO$_2$ EMISSION AMOUNT    [NOT DISCLOSED]] | |
| DD INFORMATION | ... |

# FIG. 16

SERVER DEVICE 1

COMPANY TERMINAL 2

S11
INPUT PRODUCT
INFORMATION

S12
STORE PRODUCT
INFORMATION

— PRODUCT INFORMATION —

S13
INPUT PERMISSION
INFORMATION FOR
SPECIFIC PRODUCT

S14
INVEST ACCESS
AUTHORITY BASED
ON PERMISSION
INFORMATION

— PERMISSION INFORMATION —

S15
REQUEST LINKING OF
SPECIFIC PRODUCT

— LINKING REQUEST —

S16
IDENTIFY PRODUCT
INFORMATION TO
WHICH ACCESS IS
PERMITTED AND
GENERATE LINKING
SCREEN

S17
DESIGNATE LINKING
DESTINATION

— LINKING DATA —

S18
UPDATE PRODUCT
INFORMATION TO
REFLECT DETAILS OF
LINKING

## FIG. 17

SERVER DEVICE 1                    COMPANY TERMINAL 2

S21
REQUEST INFORMATION
ON PRODUCT TREE

S22
IS PRODUCT TREE FINALIZED?

NO → END

S23 / YES
INTEGRATE PIECES OF
TRACEABILITY-RELATED
INFORMATION AND
GENERATE INFORMATION
ON PRODUCT TREE

S24
EXECUTE CONCEALING
PROCESS BASED
ON AUTHORITY

S25
OUTPUT INFORMATION

EP 4 655 736 B1

# FIG. 18

11

**CONTROL UNIT**

| INFORMATION COLLECTING UNIT | 111 |

| AUTHORITY SETTING UNIT | 112 |

| LINKING UNIT | 113 |

| INFORMATION PROVIDING UNIT | 114 |

| MANAGEMENT UNIT | 115 |

# FIG. 19

21

**CONTROL UNIT**

| PRODUCT INFORMATION GENERATING UNIT | 211 |

| AUTHORITY SETTING UNIT | 212 |

| LINKING REQUEST UNIT | 213 |

| INFORMATION ACQUIRING UNIT | 214 |

| MANAGEMENT UNIT | 215 |

# FIG. 20

# FIG. 21

SERVER DEVICE 1 COMPANY TERMINAL 2

**S41**

IDENTIFY PROVISIONAL
TERMINAL END PRODUCT

**S42**

IDENTIFY COMPANY
TERMINAL TO WHICH
REQUEST WILL BE
TRANSMITTED

**S43**

TRANSMIT REQUEST TO
FINALIZE STATE OF
PRODUCT

**S44**

EXECUTE OPERATION
FOR FINALIZING STATE
OF PRODUCT

**EP 4 655 736 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023011322 A
- JP 2017500663 A